# EUROPEAN PATENT SPECIFICATION

(11) **EP 4 538 771 B1**
(45) Date of publication and mention of the grant of the patent: **02.12.2026**
(21) Application number: 22902816.2
(22) Date of filing: 15.07.2022
(51) Int. Cl.: G02B 27/01, B60J 1/02

(54) **HEAD-UP DISPLAY SYSTEM AND DESIGN METHOD FOR HEAD-UP DISPLAY SYSTEM**
HEAD-UP-ANZEIGESYSTEM UND ENTWURFSVERFAHREN FÜR EIN HEAD-UP-ANZEIGESYSTEM
SYSTÈME D'AFFICHAGE TÊTE HAUTE ET PROCÉDÉ DE CONCEPTION POUR SYSTÈME D'AFFICHAGE TÊTE HAUTE

(43) Date of publication of application: 16.04.2025
(73) Proprietor: Fuyao Glass Industry Group Co., Ltd., Fuqing, Fujian 350300 (CN)
(72) Inventor: HE, Changlong, Fuqing, Fujian 350300 (CN); GUAN, Jinliang, Fuqing, Fujian 350300 (CN); ZHANG, Canzhong, Fuqing, Fujian 350300 (CN)
(74) Representative: Mewburn Ellis LLP
(86) International application number: PCT/CN2022/105863
(87) International publication number: WO 2023/103381

(56) References cited:
- CN-A- 110 073 274
- CN-A- 113 968 053
- CN-A- 114 200 675
- CN-A- 114 740 627
- CN-A- 114 740 627
- CN-U- 213 987 029
- DE-A1- 102007 059 323
- US-A1- 2017 285 339
- US-A1- 2018 157 033

## Description

### TECHNICAL FIELD

This disclosure relates to the field of vehicle, and in particular to a head-up display system and a design method for a head-up display system.

### BACKGROUND

With the development of vehicle intelligence, head-up display (HUD) systems are more and more used in vehicles. Through the head-up display system, images, such as driving information, are displayed in front of a front windshield in real time. The front windshield is usually laminated glass, and given that actual use conditions of the vehicle are complex, different drivers have different heights of sitting posture, and observation positions of human eyes constitute an envelope space, so that the laminated glass with a constant wedge angle is unable to well solve the problem of secondary images at different observation angles. In general, different wedge angles can be set for different projection display regions of the laminated glass, that is, the laminated glass with variable wedge angles is adopted to eliminate the secondary image. The virtual-image plane of a conventional HUD image is designed to be vertical to the ground and face the driver, and such a virtual-image plane may cause the scatter distribution of theoretical wedge angles required by different projection display regions of the laminated glass for eliminating secondary images to be excessively discrete. In addition, the augmented reality head-up display (AR-HUD) may cover more lanes and provide richer information such as navigation warnings and the like. Field of view (FOV) of the AR-HUD may be expanded, such as 10° × 5°, or even 20° × 5°, which leads to an increase in the area of the projection display region. As a result, the scatter distribution of the theoretical wedge angle required by the projection display region for eliminating secondary images may be more discrete, which leads to that the secondary image problem cannot be well solved even if the projection display region with variable wedge angles is adopted, and thus the driving experience is affected.
CN114740627A relates to a head-up display system and its design method. The head-up display system comprises a projection assembly and laminated glass, wherein the laminated glass features at least one projection display area. It further includes a virtual eyepiece plane located inside the vehicle and at least one virtual image plane positioned outside the vehicle, with each projection display area corresponding to one image plane. The projection assembly includes a projection light source capable of projecting onto the projection display area. The thickness of the projection display area decreases from the upper edge toward the lower edge, exhibiting a wedge-shaped cross-section with a wedge angle that continuously and nonlinearly decreases from the lower edge toward the upper edge. The height-to-width ratio of the virtual image plane is less than or equal to 0.5. Both the height and width of the virtual image plane influence the wedge-shaped profile at different positions within the projection display area. This significantly reduces the height proportion of the virtual image plane, thereby diminishing the gradient variation of the wedge-shaped profile across different positions within the projection display area.
US2018/157033A1 relates to a thermoplastic film for a laminated-glass pane, having a non-linear continuous wedge insert in both a vertical and horizontal direction in some sections, is described. In the vertical direction, the laminated-glass pane is, from the perspective of an observer, further at a lower end than at an upper end. In a laminated-glass pane equipped with the thermoplastic film, the thermoplastic film is located between two glass layers. The thermoplastic film has at least a first section having a wedge angle profile that is continuous and non-linear in the vertical and horizontal direction, such that ghost images from a head-up display are minimized in the region of the first section. The thermoplastic film also minimizes double images in transmission in the first section and in further sections.
US2017/285339A1 relates to a tapered interlayer and windshield employing the same are provided. Unlike conventional windshields, which are optimized to reduce ghost images for a single driver height, the windshields of the present invention may exhibit reduced ghosting for drivers of multiple heights, including very tall or very short drivers, while also providing desirable image clarity for average-height drivers. Windshields as described herein may be used in a variety of applications, including automotive, aircraft, marine, and recreational vehicles that employ HUD projection systems.

### SUMMARY

The invention is defined by the independent claims. In a first aspect, a head-up display system is provided in the present disclosure. The head-up display system includes laminated glass, a projection assembly, and an eyebox. The laminated glass has at least one projection display region. When the laminated glass is mounted on a vehicle, each of the at least one projection display region has a wedge-shaped cross-sectional shape in which a thickness of the laminated glass at an upper edge of the laminated glass is greater than a thickness of the laminated glass at a lower edge of the laminated glass, and has a section in which a wedge angle continuously decreases in a direction from the lower edge to the upper edge. The projection assembly includes at least one projection light-source capable of projecting onto the at least one projection display region. Projection light emitted by the at least one projection light-source is incident onto the at least one projection display region to form a projection image. The projection image has a virtual-image plane. The eyebox has an eyebox plane through which the projection image is observed via the at least one projection display region. The eyebox plane includes multiple eyebox sub-planes. The virtual-image plane includes multiple virtual-image sub-planes corresponding to the multiple eyebox sub-planes. Each of the multiple virtual-image sub-planes includes an upper virtual-image plane and a lower virtual-image plane. An upper virtual-image plane and/or a lower virtual-image plane of each of at least one of the multiple virtual-image sub-planes is tilted towards a direction in which a corresponding virtual-image sub-plane is observed from one of the multiple eyebox sub-planes, and has a forward tilted angle greater than or equal to 45°.

In a second aspect, a design method for a head-up display system is provided in the present disclosure. The design method for a head-up display system includes the following. A projection assembly and laminated glass are provided. Projection light emitted by the projection assembly is incident onto at least one projection display region on the laminated glass. An eyebox plane inside a vehicle is designed according to an observer inside the vehicle. A virtual-image plane that is tilted towards a direction in which a corresponding virtual-image sub-plane of the virtual-image plane is observed from an eyebox sub-plane of the eyebox plane is designed, according to a projection image observed by the observer inside the vehicle through each of the at least one projection display region. The eyebox plane includes multiple eyebox sub-planes. The virtual-image plane includes multiple virtual-image sub-planes. Each of the multiple virtual-image sub-planes corresponds to one of the multiple eyebox sub-planes. Each of the multiple virtual-image sub-planes includes an upper virtual-image plane and a lower virtual-image plane. An upper virtual-image plane and/or a lower virtual-image plane of each of at least one of the multiple virtual-image sub-planes is tilted towards the direction in which the corresponding virtual-image sub-plane is observed from the eyebox sub-plane, and has a forward tilted angle greater than or equal to 45°. An observation lattice on each of the multiple eyebox sub-planes is selected. A virtual-image lattice on each of the multiple virtual-image sub-planes is selected. A connecting line of a point in the observation lattice and a point in the virtual-image lattice passes through a corresponding projection display region of the at least one projection display region. An intersection of the connecting line and the corresponding projection display region is an incident point. Multiple theoretical wedge angles of the laminated glass when projection images at corresponding incident points have no secondary image are calculated, according to the projection assembly, the laminated glass, and multiple connecting lines. A first theoretical wedge-angle fitting line of wedge angles with distances from incident points to a glass bottom-edge of the laminated glass is obtained by fitting, according to the multiple theoretical wedge angles and distances from incident points corresponding to all theoretical wedge angles to the glass bottom-edge of the laminated glass. A wedge angle of the laminated glass in a corresponding projection display region of the at least one projection display region is determined according to the first theoretical wedge-angle fitting line.

### BRIEF DESCRIPTION OF THE DRAWINGS

FIG. 1 is a schematic structural view of a head-up display (HUD) system provided in an implementation of the present disclosure.
FIG. 2 is a schematic view of optical paths of the head-up display system provided in the implementation in FIG. 1.
FIG. 3 is a schematic view of the head-up display system provided in the implementation in FIG. 1 and mounted on a vehicle.
FIG. 4 is a schematic view of an upper virtual-image plane and a lower virtual-image plane of the head-up display system provided in the implementation in FIG. 1 and tilted forward.
FIG. 5 is a schematic view of a virtual-image sub-plane of the head-up display system provided in the implementation in FIG. 1 and tilted forward.
FIG. 6 is a schematic view of distribution of multiple theoretical wedge angles required by the head-up display system provided in the implementation in FIG. 1 for eliminating secondary images.
FIG. 7 is a simulation view of a relationship between a forward tilted angle of a virtual-image sub-plane and *VID1*/ *VID2* of the head-up display system provided in the implementation in FIG. 1.
FIG. 8 is a schematic view of a fitting line of a wedge angle in a section of the head-up display system provided in the implementation in FIG. 1.
FIG. 9 is a schematic structural view of a head-up display system provided in another implementation of the present disclosure.
FIG. 10 is a schematic view of optical paths of the head-up display system provided in the implementation in FIG. 9.
FIG. 11 is a schematic structural view of a head-up display system provided in yet another implementation of the present disclosure.
FIG. 12 is a structural schematic view of a laminated glass of the head-up display system provided in the implementation in FIG. 1.
FIG. 13 is a flowchart of a design method for a head-up display system provided in an implementation of the present disclosure.
FIG. 14 is a schematic view of optical paths in the design method for a head-up display system provided in the implementation in FIG. 13.
FIG. 15 is a schematic view of a first theoretical wedge-angle fitting line in the design method for a head-up display system provided in the implementation in FIG. 13.
FIG. 16 is a schematic view of adjusting two adjacent first theoretical wedge-angle fitting lines of the same type of projection display regions in the design method for a head-up display system provided in the implementation in FIG. 13.
FIG. 17 is a schematic view of adjusting two adjacent first theoretical wedge-angle fitting lines of different types of projection display regions in the design method for a head-up display system provided in the implementation in FIG. 13.
FIG. 18 is a schematic view of two adjacent first theoretical wedge-angle fitting lines of different types of projection display regions in the design method for a head-up display system provided in the implementation in FIG. 17 after adjustment.
FIG. 19 is a schematic design view of an observation lattice and a virtual-image lattice in a design method for a head-up display system provided in an implementation of the present disclosure.
FIG. 20 is a scatter distribution plot of theoretical wedge angles corresponding to no secondary image when a virtual sub-plane is observed from a perpendicular bisector of an eyebox sub-plane in the design method for a head-up display system provided in the implementation in FIG. 19.
FIG. 21 is an outline view of distribution of theoretical wedge angles corresponding to no secondary image when multiple virtual-image sub-planes are observed from multiple eyebox sub-planes in a first embodiment and a second embodiment in the design method for a head-up display system provided in the implementation in FIG. 19.
FIG. 22 is a scatter distribution plot of theoretical wedge angles corresponding to no secondary image when multiple virtual-image sub-planes are observed from multiple eyebox sub-planes in a first embodiment and a second embodiment in the design method for a head-up display system provided in the implementation in FIG. 19.

Description of reference signs of the accompanying drawings: head-up display system 1; laminated glass 10; projection display region 11; upper edge 111; lower edge 112; section 113; projection image 114; first projection-display-region 115; first projection image 1151; second projection-display-region 116; second projection image 1161; glass bottom-edge 12; glass top-edge 13; first transparent substrate 14; second transparent substrate 15; intermediate adhesive layer 16; projection assembly 20; projection light-source 21; first projection light-source 211; second projection light-source 212; eyebox EB1; eyebox plane EB10; eyebox sub-plane EB11; observation lattice EB111; virtual-image plane TB10; virtual-image sub-plane TB11; upper virtual-image plane TB112; lower virtual-image plane TB113; virtual-image lattice TB111; actual wedge-angle fitting line L0; first theoretical wedge-angle fitting line L1; second theoretical wedge-angle fitting line L2; third theoretical wedge-angle fitting line L3.

### DETAILED DESCRIPTION

In a first aspect, a head-up display system is provided in the present disclosure. The head-up display system includes laminated glass, a projection assembly, and an eyebox. The laminated glass has at least one projection display region. Each of the at least one projection display region has a wedge-shaped cross-sectional shape in which a thickness of the laminated glass at an upper edge of the laminated glass is greater than a thickness of the laminated glass at a lower edge of the laminated glass, and has a section in which a wedge angle continuously decreases in a direction from the lower edge to the upper edge, when the laminated glass is mounted on a vehicle. The projection assembly includes at least one projection light-source capable of projecting onto the at least one projection display region. Projection light emitted by the at least one projection light-source is incident onto the at least one projection display region to form a projection image. The projection image has a virtual-image plane. An eyebox having an eyebox plane through which the projection image is observed via the at least one projection display region. The eyebox plane includes multiple eyebox sub-planes. The virtual-image plane includes multiple virtual-image sub-planes corresponding to the multiple eyebox sub-planes. Each of the multiple virtual-image sub-planes includes an upper virtual-image plane and a lower virtual-image plane. An upper virtual-image plane and/or a lower virtual-image plane of each of at least one of the multiple virtual-image sub-planes is tilted towards a direction in which a corresponding virtual-image sub-plane is observed from one of the multiple eyebox sub-planes, and has a forward tilted angle greater than or equal to 45°.

In an implementation, the upper virtual-image plane and/or the lower virtual-image plane of each of the at least one of the multiple virtual-image sub-planes is tilted towards the direction in which the corresponding virtual-image sub-plane is observed from the eyebox sub-plane, and has the forward tilted angle greater than or equal to 75°.

In an implementation, each of at least one of the multiple virtual-image sub-planes is tilted towards the direction in which the corresponding virtual-image sub-plane is observed from the eyebox sub-plane, and has a forward tilted angle greater than or equal to 45°.

In an implementation, each of at least one of the multiple virtual-image sub-planes is tilted towards the direction in which the corresponding virtual-image sub-plane is observed from the eyebox sub-plane, and has a forward tilted angle greater than or equal to 75°.

In an implementation, a distance between an upper point of a virtual-image sub-plane and a central point of a corresponding eyebox sub-plane of the multiple eyebox sub-planes is *VID1,* a distance between a lower point of the virtual-image sub-plane and the central point of the corresponding eyebox sub-plane is *VID2,* and *VID1 > VID2.*

In an implementation, *VID1*/*VID2* ≥ 1.5.

In an implementation, the section has a measured wedge angle at any point in the section and has multiple theoretical wedge angles for eliminating secondary images at any point in the section. Multiple measured wedge angles at all points in the section are fitted to obtain an actual wedge-angle fitting line. Multiple theoretical wedge angles at all points in the section are fitted to obtain a first theoretical wedge-angle fitting line. A maximum deviation between the actual wedge-angle fitting line and a part of the first theoretical wedge-angle fitting line corresponding to the actual wedge-angle fitting line is less than or equal to 0.07 mrad.

In an implementation, the actual wedge-angle fitting line and the first theoretical wedge-angle fitting line each conform to a polynomial function.

In an implementation, a maximum rate of change *(ROC)* of continuous monotonic decrease of the wedge angle in the section satisfies: *ROC* ≤ 0.3 mrad/100 mm; or *ROC* ≤ 0.2 mrad/100 mm; or *ROC* ≤ 0.1 mrad/100 mm; or *ROC* ≤ 0.05 mrad/100 mm.

In an implementation, an angle between any adjacent two of the multiple virtual-image sub-planes is less than or equal to 15°.

In an implementation, a direction from a glass bottom-edge of the laminated glass to a glass top-edge of the laminated glass, a ratio of a length of the section to a length of each of the at least one projection display region is not less than 70%.

In an implementation, the at least one projection display region includes at least one first projection-display-region and at least one second projection-display-region. The at least one projection light-source is incident onto the at least one first projection-display-region to form a first projection image. The first projection image has a virtual image distance of 7 m to 100 m. The at least one projection light-source is incident onto the at least one second projection-display-region to form a second projection image. The second projection image has a virtual image distance of 1 m to 6 m.

In an implementation, the at least one projection light-source includes at least one first projection light-source and at least one second projection light-source. The at least one first projection light-source is incident onto the at least one first projection-display-region. The at least one second projection light-source is incident onto the at least one second projection-display-region.

In an implementation, the laminated glass includes a first transparent substrate, a second transparent substrate, and an intermediate adhesive layer. The intermediate adhesive layer is disposed between the first transparent substrate and the second transparent substrate, and used for adhering the first transparent substrate and the second transparent substrate. At least one of the first transparent substrate, the second transparent substrate, or the intermediate adhesive layer has a wedge angle in the at least one projection display region.

In an implementation, in the at least one projection display region, a wedge angle of the first transparent substrate and a wedge angle of the second transparent substrate are both 0, and a wedge angle of the intermediate adhesive layer is equal to a wedge angle of the at least one projection display region.

In an implementation, in the at least one projection display region, the first transparent substrate and/or the second transparent substrate has a wedge angle, the intermediate adhesive layer has a wedge angle, and a sum of the wedge angle of the first transparent substrate and/or the wedge angle of the second transparent substrate and the wedge angle of the intermediate adhesive layer is equal to a wedge angle of the at least one projection display region.

In a second aspect, a design method for a head-up display system includes the following. A projection assembly and laminated glass are provided. Projection light emitted by the projection assembly is incident onto at least one projection display region on the laminated glass. An eyebox plane inside a vehicle is designed according to an observer inside the vehicle. A virtual-image plane that is tilted towards a direction in which a corresponding virtual-image sub-plane of the virtual-image plane is observed from an eyebox sub-plane of the eyebox plane is designed, according to a projection image observed by the observer inside the vehicle through each of the at least one projection display region. The eyebox plane includes multiple eyebox sub-planes. The virtual-image plane includes multiple virtual-image sub-planes. Each of the multiple virtual-image sub-planes corresponds to one of the multiple eyebox sub-planes. Each of the multiple virtual-image sub-planes includes an upper virtual-image plane and a lower virtual-image plane. An upper virtual-image plane and/or a lower virtual-image plane of each of at least one of the multiple virtual-image sub-planes is tilted towards the direction in which the corresponding virtual-image sub-plane is observed from the eyebox sub-plane, and has a forward tilted angle greater than or equal to 45°. An observation lattice on each of the multiple eyebox sub-planes is selected. A virtual-image lattice on each of the multiple virtual-image sub-planes is selected. A connecting line of a point in the observation lattice and a point in the virtual-image lattice passes through a corresponding projection display region of the at least one projection display region. An intersection of the connecting line and the corresponding projection display region is an incident point. Multiple theoretical wedge angles of the laminated glass when projection images at corresponding incident points have no secondary image are calculated, according to the projection assembly, the laminated glass, and multiple connecting lines. A first theoretical wedge-angle fitting line of wedge angles with distances from incident points to a glass bottom-edge of the laminated glass is obtained by fitting, according to the multiple theoretical wedge angles and distances from incident points corresponding to all theoretical wedge angles to the glass bottom-edge of the laminated glass. A wedge angle of the laminated glass in a corresponding projection display region of the at least one projection display region is determined according to the first theoretical wedge-angle fitting line.

In an implementation, designing the virtual-image plane that is tilted towards the direction in which the corresponding virtual-image sub-plane is observed from the eyebox sub-plane, according to the projection image observed by the observer inside the vehicle through each of the at least one projection display region includes the following. At least one virtual-image sub-plane is designed to be tilted towards the direction in which the corresponding virtual-image sub-plane is observed from the eyebox sub-plane and to have a forward tilted angle greater than or equal to 45°.

In an implementation, designing the virtual-image plane that is tilted towards the direction in which the corresponding virtual-image sub-plane is observed from the eyebox sub-plane, according to the projection image observed by the observer inside the vehicle through each of the at least one projection display region includes the following. When the upper virtual-image plane and/or the lower virtual-image plane of each of at least one of the multiple virtual-image sub-planes is tilted towards the direction in which the corresponding virtual-image sub-plane is observed from the eyebox sub-plane, *WID1 > VID2.* A distance between an upper point of a virtual-image sub-plane and a central point of a corresponding eyebox sub-plane of the multiple eyebox sub-planes is *VID1.* A distance between a lower point of the virtual-image sub-plane and the central point of the corresponding eyebox sub-plane is *VID2.*

In an implementation, *VID1*/*VID2* ≥ 1.5.

In an implementation, designing the virtual-image plane that is tilted towards the direction in which the corresponding virtual-image sub-plane is observed from the eyebox sub-plane, according to the projection image observed by the observer inside the vehicle through each of the at least one projection display region includes the following. An angle between any adjacent two of the multiple virtual-image sub-planes is designed to be less than or equal to 15°.

In an implementation, a ratio of a maximum local range *ΔW* of the multiple theoretical wedge angles to a global range *ΔC* of the multiple theoretical wedge angles satisfies: *ΔW*/*ΔC* ≤ 0.9.

In an implementation, the at least one projection display region includes at least two first projection-display-regions, or at least two second projection-display-regions. At least two first theoretical wedge-angle fitting lines of wedge angles with distances from incident points to the glass bottom-edge are obtained by fitting. When a maximum deviation of any two adjacent first theoretical wedge-angle fitting lines of the at least two first theoretical wedge-angle fitting lines is greater than 0.15 mrad, after determining the wedge angle of the laminated glass in the corresponding projection display region of the at least one projection display region according to the first theoretical wedge-angle fitting line, the design method for a head-up display system further includes the following. A distance between the eyebox plane and a virtual-image plane corresponding to one of the any two adjacent first theoretical wedge-angle fitting lines is adjusted. Multiple new theoretical wedge angles are recalculated. A second theoretical wedge-angle fitting line of wedge angles with distances from incident points to the glass bottom-edge is obtained by fitting, according to the multiple new theoretical wedge angles and distances from incident points corresponding to the multiple new theoretical wedge angles to the glass bottom-edge. It is determined whether a maximum deviation between the second theoretical wedge-angle fitting line and the other of the any two adjacent first theoretical wedge-angle fitting lines is less than or equal to 0.15 mrad. If the maximum deviation between the second theoretical wedge-angle fitting line and the other of the any two adjacent first theoretical wedge-angle fitting lines is not less than or equal to 0.15 mrad, the above operations are repeated. If the maximum deviation between the second theoretical wedge-angle fitting line and the other of the any two adjacent first theoretical wedge-angle fitting lines is less than or equal to 0.15 mrad, a wedge angle of the laminated glass in a corresponding first projection-display-region or a corresponding second projection-display-region is determined according to the second theoretical wedge-angle fitting line.

In an implementation, the at least one projection display region includes at least one first projection-display-region and at least one second projection-display-region. At least two first theoretical wedge-angle fitting lines of wedge angles with distances from incident points to the glass bottom-edge are obtained by fitting. When a maximum deviation of any two adjacent first theoretical wedge-angle fitting lines of the at least two first theoretical wedge-angle fitting lines is greater than 0.2 mrad, after determining the wedge angle of the laminated glass in the corresponding projection display region of the at least one projection display region according to the first theoretical wedge-angle fitting line, the design method for a head-up display system further includes the following. A distance between the eyebox plane and a virtual-image plane corresponding to one of the any two adjacent first theoretical wedge-angle fitting lines is adjusted. Multiple new theoretical wedge angles are recalculated. A third theoretical wedge-angle fitting line of wedge angles with distances from incident points to the glass bottom-edge is obtained by fitting, according to the multiple new theoretical wedge angles and distances from incident points corresponding to the multiple new theoretical wedge angles to the glass bottom-edge. It is determined whether a maximum deviation between the third theoretical wedge-angle fitting line and the other of the any two adjacent first theoretical wedge-angle fitting lines is less than or equal to 0.15 mrad. If the maximum deviation between the third theoretical wedge-angle fitting line and the other of the any two adjacent first theoretical wedge-angle fitting lines is not less than or equal to 0.15 mrad, the above operations are repeated. If the maximum deviation between the third theoretical wedge-angle fitting line and the other of the any two adjacent first theoretical wedge-angle fitting lines is less than or equal to 0.15 mrad, a wedge angle of the laminated glass in a corresponding first projection-display-region or a corresponding second projection-display-region according to the third theoretical wedge-angle fitting line is determined.

A collection of the multiple theoretical wedge angles adjusted has a maximum local range *ΔWU,* and has a global range *ΔCU,* and a ratio of *ΔWU to ΔCU* satisfies: *ΔWU*/*ΔCU* ≤ 0.9.

The following will clearly and completely describe technical solutions of embodiments of the present disclosure with reference to the accompanying drawings. Apparently, embodiments described herein are merely some embodiments, rather than all embodiments. Based on the embodiments of the present disclosure, all other embodiments obtained by those of ordinary skill in the art without creative effort shall fall within the protection scope of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it can optionally include other steps or units that are not listed; alternatively, other steps or units inherent to the process, method, product, or device can be included either.

The term "embodiment" or "implementation" referred to herein means that particular features, structures, or properties described in conjunction with implementations may be defined in at least one embodiment of the present disclosure. The phrase "implementation" appearing in various places in the specification does not necessarily refer to the same embodiment or an independent/alternative embodiment that is mutually exclusive with other embodiments. Those skilled in the art will understand expressly and implicitly that an embodiment described in the present disclosure may be combined with other embodiments

In the present disclosure, since the laminated glass is a transparent medium, after light emitted by the projection light-source enters the laminated glass, the light is reflected on an inner surface of the laminated glass and then enters an eyebox plane, to image in front of the glass, thereby forming a first virtual image, which is called a primary image. The light is also reflected on an outer surface of the laminated glass and then enters the eyebox plane, to image in front of the laminated glass, thereby forming a second virtual image. When the laminated glass includes a high-reflective dielectric layer, such as a metal coating layer containing silver (Ag), modified polyethylene terephthalate (PET) with a high reflectivity, etc., reflection also occurs, and a third and even more secondary images are formed. The second virtual image, the third virtual image, or even more virtual images are collectively called secondary images. To eliminate the secondary image, the laminated glass 10 needs to set corresponding wedge angles for the projection display region 11, so that the secondary image can overlap the primary image, and thus the observer can see the HUD image without the secondary image through the projection display region 11. The light corresponding to the HUD image is reflected on different regions of the projection display region 11 to enter the eyebox EB1 at different angles. In addition, due to different sitting postures of the observer in the cab, the light corresponding to the HUD image also enters the eyebox EB1 at different angles. Therefore, different wedge angles need to be set for different regions of the projection display region 11 of the laminated glass 10.

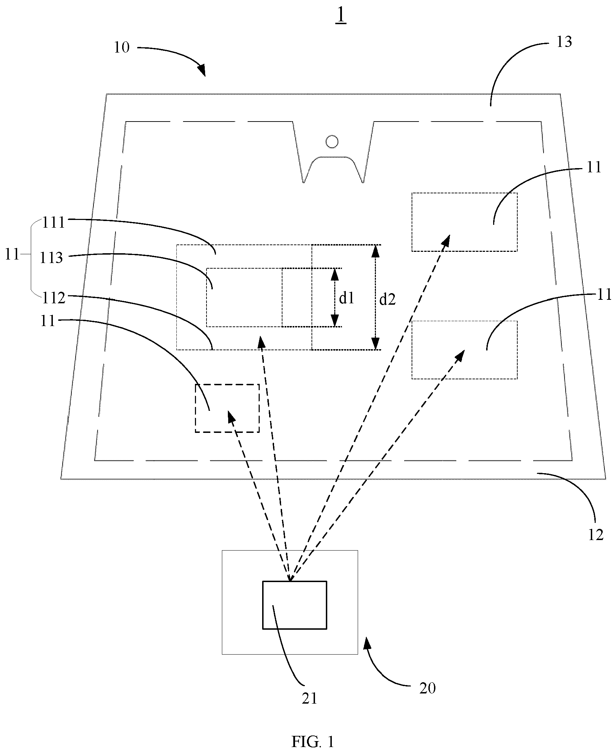

A head-up display system 1 is provided in an implementation of the present disclosure. Referring to FIG. 1, FIG. 2, FIG. 3, and FIG. 4, in this implementation, the head-up display system 1 includes laminated glass 10, a projection assembly 20, and an eyebox EB1. The laminated glass 10 has at least one projection display region 11. When the laminated glass 10 is mounted on a vehicle, each projection display region 11 has a wedge-shaped cross-sectional shape in which the thickness of the laminated glass 10 at an upper edge 111 of the laminated glass 10 is greater than the thickness of the laminated glass 10 at a lower edge 112 of the laminated glass 10, and has a section 113 in which a wedge angle continuously decreases in a direction from the lower edge 112 to the upper edge 111. The projection assembly 20 includes at least one projection light-source 21 capable of projecting onto the at least one projection display region 11. Projection light emitted by the at least one projection light-source 21 is incident onto the at least one projection display region 11 to form a projection image 114. The projection image 114 has a virtual-image plane TB10. The eyebox EB1 has an eyebox plane EB10 through which the projection image 114 is observed via the at least one projection display region 11. The eyebox plane EB10 includes multiple eyebox sub-planes EB11 from low to high. The virtual-image plane TB10 includes multiple virtual-image sub-planes TB11 that are from high to low and corresponding to the multiple eyebox sub-planes EB11. Each virtual-image sub-plane TB11 includes an upper virtual-image plane TB112 and a lower virtual-image plane TB113. An upper virtual-image plane TB112 and/or a lower virtual-image plane TB113 of each of at least one virtual-image sub-plane TB11 is tilted towards a direction in which a corresponding virtual-image sub-plane TB11 is observed from an eyebox sub-plane EB11, and has a forward tilted angle greater than or equal to 45° with respect to a vertical plane.

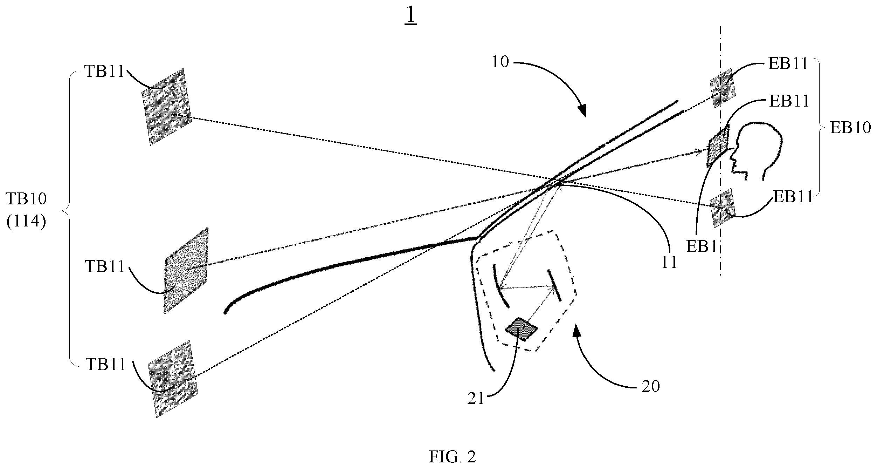

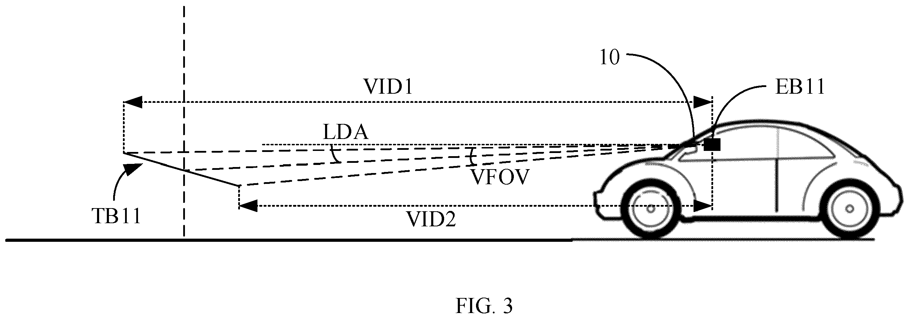

It may be noted that, in FIG. 2, for example, the number of eyebox sub-planes EB11 and the number of virtual-image sub-planes TB11 are both three, and the number of the eyebox sub-planes EB11 and the number of the virtual-image sub-planes TB11 are not limited. In FIG. 3, for example, one virtual-image sub-plane TB11 is tilted towards the direction in which the corresponding virtual-image sub-plane TB11 is observed from the eyebox sub-plane EB 11. The vertical plane is a plane perpendicular to the ground and perpendicular to the direction in which the corresponding virtual-image sub-plane TB11 is observed from the eyebox sub-plane EB11.

In this implementation, each projection display region 11 has the section 113 in which the wedge angle continuously decreases in the direction from the lower edge 112 to the upper edge 111. It can be understood that in each projection display region 11, the wedge angle of the section 113 may linearly or non-linearly decrease. In addition to the section 113, wedge angles of other sections in the projection display region 11 may be equal to 0, may be constant, may increase linearly or increase non-linearly, or may decrease linearly or decrease non-linearly, or may continuously decrease together with the wedge angle of the section 113.

In this implementation, the head-up display system 1 is applied to the vehicle and implement information display in front of the front windshield. The head-up display system 1 includes the projection assembly 20. Images projected by the projection assembly 20 to the at least one projection display region 11 include head-up display (HUD) images of one or more types, HUD images with one or more angles, and HUD images with one or more display distances, so that the head-up display system 1 has a multi-information display function, thereby increasing richness of the image display of the head-up display system 1. The at least one projection display region 11 is used for displaying HUD images. Specifically, the at least one projection display region 11 may be used for providing augmented reality head-up display (AR-HUD), windshield head-up display (W-HUD), or the like.

In this implementation, the projection assembly 20 includes at least one projection light-source 21 projecting onto the at least one projection display region 11. One projection light-source 21 is disposed corresponding to one projection display region 11, or one projection light-source 21 is disposed corresponding to multiple projection display regions 11. In one implementation, the projection light emitted by the projection light-source 21 is directly incident onto the projection display region 11. In another implementation, the projection light emitted by the projection light-source 21 is incident onto the projection display region 11 through a reflection device. The projection light emitted by the projection light-source 21 is incident onto the projection display region 11 to form the projection image 114. The projection image 114 is displayed in front of the laminated glass 10. In addition, the projection image 114 has the virtual-image plane TB10 located outside the vehicle when the laminated glass 10 is mounted on the vehicle.

In this implementation, the eyebox EB1 is used for simulating an eye of a driver in a cab of the vehicle to observe the projection image 114. The eyebox EB1 has the eyebox plane EB10 through which the projection image 114 is observed via the projection display region 11. The eyebox plane EB10 is a central cross-section of the eyebox EB1 perpendicular to the ground and perpendicular to the direction in which the corresponding virtual-image sub-plane TB11 is observed from the eyebox sub-plane EB11.

Next, for example, the head-up display system 1 is applied to the front windshield of the vehicle. The projection light emitted by the projection light-source 21 in the projection assembly 20 is incident onto the projection display region 11. At least part of the projection light is reflected by the projection display region 11 and then enters the eyebox plane EB10, thereby forming the projection image 114 in front of the laminated glass 10 of the vehicle. The projection image 114 has the virtual-image plane TB10. According to the height of the position of the eyebox EB1 in the cab of the vehicle, the eyebox plane EB10 includes multiple eyebox planes EB11 from low to high. Correspondingly, the projection light forming the projection image 114 enters the eyebox sub-planes EB11 at different positions, so that the projection image 114 has virtual-image sub-planes TB11 at different positions. The virtual-image sub-plane TB11 includes multiple virtual-image sub-planes TB11 from high to low corresponding to the multiple eyebox sub-planes EB11 from low to high. Since the laminated glass 10 has a certain thickness, when the projection light emitted by the projection light-source 21 is incident onto the projection display region 11, the projection light is reflected on the inner surface of the laminated glass 10 to the eyebox plane EB10 to form a primary image of the projection image 114, and the projection light is reflected on the outer surface of the laminated glass 10 and/or the high-reflective dielectric layer inside the laminated glass 10 to the eyebox plane EB10 to form one or more secondary images. Therefore, the wedge angle needs to be set for the projection display region 11 to eliminate the secondary image, that is, the secondary image overlaps the primary image. In addition, the theoretical wedge angles required for elimination of the secondary images are different when the same point of the projection display region 11 is viewed from different points on the eyebox plane EB10. Therefore, there are multiple theoretical wedge angles for eliminating the secondary image for each point of the projection display region 11. However, in the actual preparation of the laminated glass 10, there can be only one wedge angle at each point of the projection display region 11. Therefore, it is necessary to calculate an optimal wedge angle by fitting the multiple theoretical wedge angles at each point of the projection display region 11.

In the related art, a virtual-image plane of a conventional head-up display system is approximately perpendicular to the ground, so that a discrete distribution degree of multiple theoretical wedge angles for eliminating the secondary images for each point of the projection display region 11 is relatively large. As a result, the deviation between the wedge angle selected for each point of the projection display region 11 and the theoretical wedge angle required for eliminating the secondary image is large, and thus the head-up display system 1 has a high difficulty in eliminating the secondary image and has a poor effect of eliminating the secondary image.

Compared with the related art, in the head-up display system 1 provided in the present disclosure, each virtual-image sub-plane TB11 includes the upper virtual-image plane TB112 and the lower virtual-image plane TB113. For each virtual-image sub-plane TB11, a connecting line is drawn between a central point of the virtual-image sub-plane TB11 and a central point of the corresponding eyebox sub-plane EB11, and a straight line that is parallel to the ground and perpendicular to the direction in which the corresponding virtual-image sub-plane TB11 is observed from the eyebox sub-plane EB11 is drawn through the central point of the virtual-image sub-plane TB11. A plane formed by the connecting line and the straight line is a reference plane. A part of the virtual-image sub-plane TB11 located above the reference plane is the upper virtual-image plane TB112. A part of the virtual-image sub-plane TB11 located below the reference plane is the lower virtual-image plane TB113.

The upper virtual-image plane TB112 of the virtual-image sub-plane TB11 is tilted towards the direction in which the corresponding virtual-image sub-plane TB11 is observed from the eyebox sub-plane EB11, that is, the projection image 114 is locally tilted forward. Therefore, a distance between the upper virtual-image plane TB112 and the eyebox sub-plane EB11 corresponding to the virtual-image sub-plane TB11 is increased, thereby reducing the theoretical wedge angle required for eliminating the secondary image corresponding to the upper virtual-image plane TB112. Further, the local discrete distribution degree of the multiple theoretical wedge angles of the projection display region 11 is reduced, so that the distribution of the multiple theoretical wedge angles is converged towards the actual wedge-angle fitting line, that is, a local range of the multiple theoretical wedge angles is reduced.

The lower virtual-image plane TB113 of the virtual-image sub-plane TB11 is tilted towards the direction in which the corresponding virtual-image sub-plane is observed from the eyebox sub-plane, that is, the projection image 114 is locally tilted forward. Therefore, a distance between the lower virtual-image plane TB113 and the eyebox sub-plane EB11 corresponding to the virtual-image sub-plane TB11 is reduced, thereby increasing the theoretical wedge angle required for eliminating the secondary image corresponding to the upper virtual-image plane TB112. Further, the local discrete distribution degree of the multiple theoretical wedge angles of the projection display region 11 is reduced, so that the distribution of the multiple theoretical wedge angles is converged towards the actual wedge-angle fitting line, that is, a local range of the multiple theoretical wedge angles is reduced.

Both the upper virtual-image plane TB112 and the lower virtual-image plane TB113 of the virtual-image sub-plane TB11 are tilted towards the direction in which the corresponding virtual-image sub-plane is observed from the eyebox sub-plane, that is, the whole projection image 114 is tilted forward. Therefore, the whole discrete distribution degree of the multiple theoretical wedge angles of the projection display region 11 can be reduced, so that the distribution of the multiple theoretical wedge angles is converged towards the actual wedge-angle fitting line L0, that is, the local range of the multiple theoretical wedge angles is reduced.

Therefore, by titling the upper virtual-image plane TB112 and/or the lower virtual-image plane TB113 of the virtual-image sub-plane TB11 towards the direction in which the corresponding virtual-image sub-plane TB11 is observed from the eyebox sub-plane EB11, the effect of the head-up display system 1 in eliminating the secondary image is finally improved.

When the forward tilted angle of the upper virtual-image plane TB112 is larger and the forward tilted angle of the lower virtual-image plane TB113 is larger, the discrete distribution degree of the multiple theoretical wedge angles required by the projection display region 11 for eliminating the secondary image is smaller. In addition, the forward tilted angle may be adjusted by the projection assembly 20, for example, the forward tilted angle of the upper virtual-image plane TB112 and the forward tilted angle of the lower virtual-image plane TB113 can be set by adjusting a tilted angle of a curved surface of a mirror and a titled angle of a surface of a picture generation unit (PGU) in the projection assembly 20.

In addition, when the upper virtual-image plane TB112 and/or the lower virtual-image plane TB113 is tilted towards the direction in which the corresponding virtual-image sub-plane TB11 is observed from the eyebox sub-plane EB11 and has a large forward tilted angle, the upper virtual-image plane TB112 and/or the lower virtual-image plane TB113 is approximately tiled on the ground, so that the driver can feel a better ground feel and augmented reality when the driver observes the projection image 114, thereby improving driving experience.

Specifically, the forward tilted angle of the upper virtual-image plane TB112 and/or the lower virtual-image plane TB113 of each of the at least one virtual-image sub-plane TB11 is greater than or equal to 45°, or greater than or equal to 60°, or greater than or equal to 75°, or equal to 90° (being flush with the ground), which can significantly reduce the secondary image phenomenon in the projection display region 11. In addition, in some special scenarios, the forward tilted angle of the upper virtual-image plane TB112 and/or the lower virtual-image plane TB113 of each of the at least one virtual-image sub-plane TB11 is greater than 90° and less than or equal to 95°.

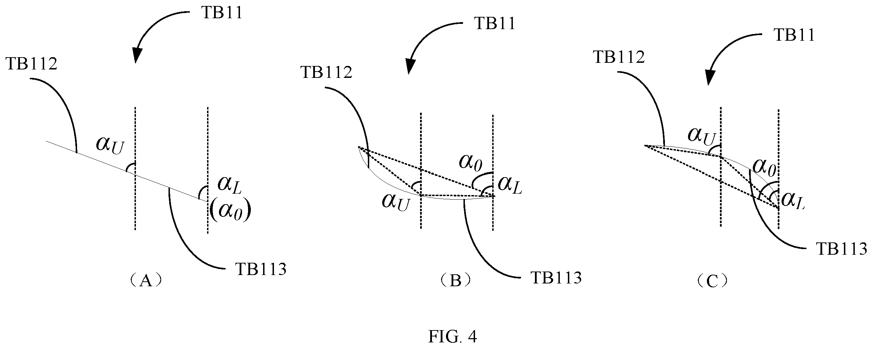

It may be noted that, each virtual-image sub-plane TB11 may be a flat plane (referring to (A) in FIG. 4) or a curved plane (referring to (B) and (C) in FIG. 4). A connecting line is drawn between a central point of each eyebox sub-plane EB11 and a central point of the corresponding virtual-image sub-plane TB11, and a plane that passes through the connecting line and is perpendicular to the ground is taken as a primary-optical-axis plane. An intersecting line of the primary-optical-axis plane and the corresponding virtual-image sub-plane TB11 has an upper point and a lower point. A forward tilted angle *α_{U}* of the upper virtual-image plane TB112 is an angle between a connecting line of the upper point and the central point of the corresponding virtual-image sub-plane TB11 and the vertical plane, where the connecting line is tilted towards the direction in which the corresponding virtual-image sub-plane TB11 is observed from the eyebox sub-plane EB11. A forward tilted angle *α_{L}* of the lower virtual-image plane TB113 is an angle between a connecting line of the lower point and the central point of the corresponding virtual-image sub-plane TB11 and the vertical plane, where the connecting line is tilted towards the direction in which the corresponding virtual-image sub-plane TB11 is observed from the eyebox sub-plane EB11. A forward tilted angle *α₀* of the virtual-image sub-plane TB11 is an angle between a connecting line of the upper point and the lower point and the vertical plane, where the connecting line is tilted towards the direction in which the corresponding virtual-image sub-plane TB11 is observed from the eyebox sub-plane EB11.

In addition, in the multiple virtual-image sub-planes TB11, when the number of upper virtual-image planes TB112 and lower virtual-image planes TB113 with the forward tilted angle greater than or equal to 45° is greater, the effect of the head-up display system 1 in eliminating the secondary images corresponding to the multiple eyebox sub-planes EB11 is better, that is, the projection images 114 observed at various heights by the driver in the cab is sharper, thereby improving the driving experience.

In conclusion, the head-up display system 1 is provided in the present disclosure. The head-up display system 1 includes the laminated glass 10, the projection assembly 20, and the eyebox EB1. The projection image 114 formed by the projection light-source 21 of the projection assembly 20 projecting onto the at least one projection display region 11 on the laminated glass 10 has the virtual-image plane TB10. The eyebox EB1 has the eyebox plane EB10 through which the projection image 114 is observed via the projection display region 11. The virtual-image plane TB10 has the multiple virtual-image sub-planes TB11 corresponding to the multiple eyebox sub-planes EB11 at different positions in the eyebox plane EB10. Each virtual-image sub-plane TB11 includes the upper virtual-image plane TB112 and the lower virtual-image plane TB113. The upper virtual-image plane TB112 and/or the lower virtual-image plane TB113 of each of the at least one virtual-image sub-plane TB11 is tilted towards the direction in which the corresponding virtual-image sub-plane TB11 is observed from the eyebox sub-plane EB11, and had the forward tilted angle greater than or equal to 45°. Therefore, the local discrete distribution degree of the multiple theoretical wedge angles required for eliminating the secondary image corresponding to the region of the projection display region 11 is reduced, so that the distribution of the multiple theoretical wedge angles is converged towards the actual wedge-angle fitting line, that is, the local range of the multiple theoretical wedge angles is reduced, and thus the effect of the head-up display system 1 in eliminating the secondary image is improved. In addition, the upper virtual-image plane TB112 and/or the lower virtual-image plane TB113 of each of the at least one virtual-image sub-plane TB11 is approximately tiled on the ground, so that the driver can feel a better ground feel and augmented reality when the driver observes the projection image 114, thereby improving driving experience. Therefore, the head-up display system 1 provided in the present disclosure can reduce or even eliminate the projected secondary image, thereby improving the driving experience.

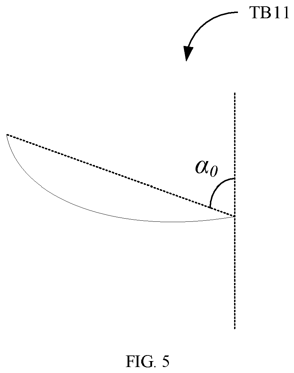

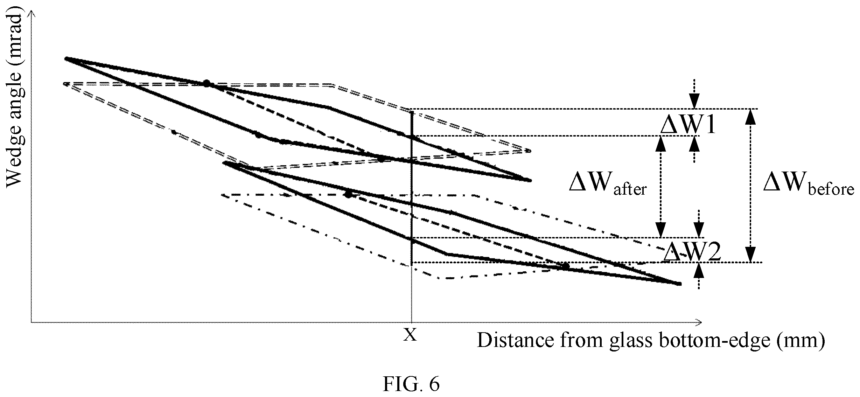

Referring to FIG. 5 and FIG. 6, in this implementation, at least one of the virtual-image sub-plane TB11 is tilted towards the direction in which the corresponding virtual-image sub-plane TB11 is observed from the eyebox sub-plane EB11, and has a forward tilted angle greater than or equal to 45°. In FIG. 5, for example, the virtual-image sub-plane TB11 is concave towards the ground. It can be understood that, FIG. 5 does not limit the shape of the virtual-image sub-plane TB11.

On the primary-optical-axis plane (referring to FIG. 5), the forward tilted angle *α₀* of each of at least one virtual-image sub-plane TB11 of the multiple virtual-image sub-planes TB11 is greater than or equal to 45°, or greater than or equal to 60°, or greater than or equal to 75°, or equal to 90° (being flush with the ground), so that the whole projection image 114 can be tilted forward, and the secondary image phenomenon in the projection display region 11 can be significantly reduced. In addition, in some special scenarios, the forward tilted angle *α₀* of each of at least one virtual-image sub-plane is greater than 90° and less than or equal to 95°.

Specifically, for example, in FIG. 6, two eyebox sub-planes EB11 located at the highest and the lowest positions among the multiple eyebox sub-planes EB11 and two corresponding virtual-image sub-planes TB11 are illustrated. In FIG. 6, dashed-line boxes represent scatter distribution outlines of multiple theoretical wedge angles corresponding to no projected secondary image when the corresponding two virtual-image sub-planes TB11 are observed from the two eyebox sub-planes EB11 located at the highest and the lowest positions on condition that the two virtual-image sub-planes TB11 are not tilted forward. In FIG. 6, the solid-line boxes represent scatter distribution outlines of multiple theoretical wedge angles corresponding to no projected secondary image when the corresponding two virtual-image sub-planes TB11 are observed from the two eyebox sub-planes EB11 located at the highest and the lowest positions on condition that the forward tilted angle of each of the two secondary image planes TB11 is greater than or equal to 45°. A dashed-line segment located in each dashed-line box represents a connecting line of multiple theoretical wedge angles corresponding to no projected secondary image when a central point of the virtual-image sub-plane TB11 is observed from a perpendicular bisector of the eyebox sub-plane EB11. *ΔW* represents a maximum among local ranges, where a local range is a difference between a maximum and a minimum among multiple theoretical wedge angles at a certain position with a distance *X* from the glass bottom-edge 12. *ΔW_{before}* represents a maximum among local ranges of the multiple theoretical wedge angles when the two virtual-image sub-planes TB11 are not tilted forward. *ΔW_{after}* represents a maximum among local ranges of the multiple theoretical wedge angles when the forward tilted angle of each of the two virtual-image sub-planes TB11 is greater than or equal to 45°. It can be seen from FIG. 6 that, compared with non-forward tilt, when the forward tilted angle of each of the two virtual-image sub-planes TB11 is greater than or equal to 45°, the maximum local range of the multiple theoretical wedge angles for eliminating the projected secondary image is reduced by *ΔW1+ΔW2,* and the distribution of the multiple theoretical wedge angles for eliminating the projected secondary image is converged to the dashed-line segment located in the dashed-line box, thereby improving the effect of reducing the projected secondary image.

Referring to FIG. 3 again, in this implementation, an intersecting line of the primary-optical-axis plane and the corresponding virtual-image sub-plane TB11 has an upper point and a lower point. A distance between the upper point of the virtual-image sub-plane TB11 and the central point of the corresponding eyebox sub-plane EB11 is *VID1.* A distance between the lower point of the virtual-image sub-plane TB11 and the central point of the corresponding eyebox sub-plane EB11 is *VID2.* When the virtual-image sub-plane TB11 is tilted towards the direction in which the corresponding virtual-image sub-plane TB11 is observed from the eyebox sub-plane EB11, *VID1 > VID2,* so that the projected secondary image is reduced.

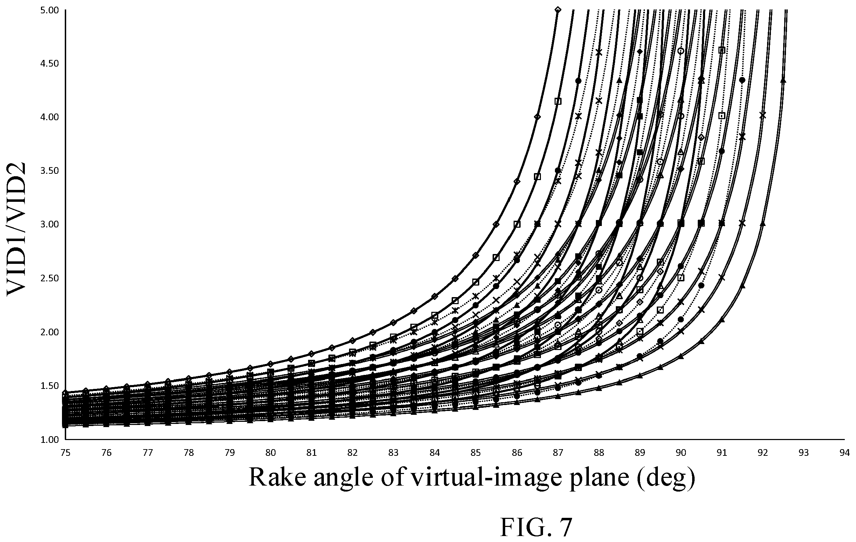

Referring to FIG. 3 and FIG. 7 again, in this implementation, the virtual-image sub-plane TB11 is tilted towards the direction in which the corresponding virtual-image sub-plane TB11 is observed from the eyebox sub-plane EB11, and *VID1*/*VID2* ≥ 1.5.

On the primary-optical-axis plane (referring to FIG. 3), an angle between a connecting line of a central point of the eyebox sub-plane EB11 and a central point of the corresponding virtual-image sub-plane TB11 and the ground is a look down angle *LDA.* When the central point of the virtual-image sub-plane TB11 is located below the central point of the eyebox sub-plane EB11, the look down angle *LDA* is a negative value, otherwise a positive value. An angle between a connecting line between the central point of the eyebox sub-plane EB11 and an upper point of the corresponding virtual-image sub-plane TB11 and a connecting line between the central point of the eyebox sub-plane EB11 and a lower point of the corresponding virtual-image sub-plane TB11 is a vertical field-of-view *VFOV.*

For example, the look down angle *LDA* = -1.5/-2.5/-3.5/-4.5 deg, the vertical field-of-view *VFOV =* 2.5/3.0/3.5/4.0/4.5/5.0/5.5/6.0 deg (referring to FIG. 7), and the relationship between *VID1*/*VID2* and the forward tilted angle of the virtual-image sub-plane TB11 is simulated. The horizontal coordinate represents the forward tilted angle of the virtual-image sub-plane TB11, the vertical coordinate represents *VID1*/*VID2,* and each line represents a situation in which one look down angle *LDA* corresponds to one vertical field-of-view *VFOV.* It can be seen from the simulation results that, when the vertical field-of-view *VFOV* is greater, the ratio of *VID1* to *VID2* is greater, so that the distribution of the multiple theoretical wedge angles for eliminating the projected secondary image is more converged, and the effect of reducing the corresponding secondary image is more obvious.

In addition, on condition that the look down angle *LDA* is constant, when the forward tilted angle of the virtual-image sub-plane TB11 is greater, the ratio of *VID1*/*VID2* is greater, and the effect of reducing the corresponding secondary image is more obvious.

In addition, when *VID1*/*VID2* ≥ 1.5, the forward tilted angle of the corresponding virtual-image sub-plane TB11 is greater than or equal to 75°, so that the effect of reducing the corresponding secondary image is more obvious, and a better ground feel and augmented reality can also be brought about.

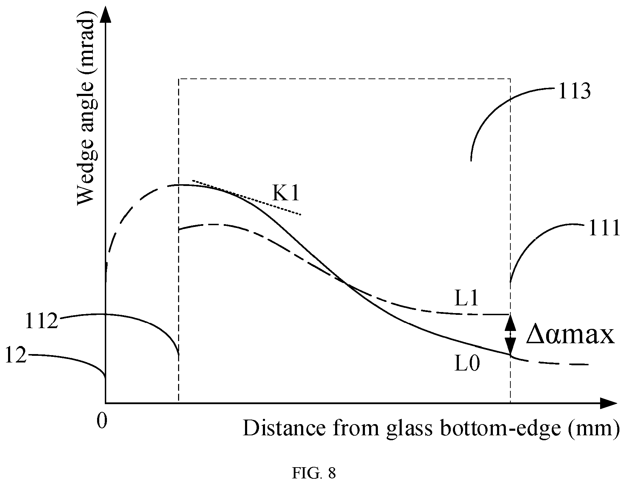

Referring to FIG. 8, in this implementation, the section 113 has a measured wedge angle at any point in the section and has multiple theoretical wedge angles for eliminating secondary images at any point in the section 113. Multiple measured wedge angles at all points in the section 113 are fitted to obtain an actual wedge-angle fitting line L0. Multiple theoretical wedge angles at all points in the section 113 are fitted to obtain a first theoretical wedge-angle fitting line L1. A maximum deviation between the actual wedge-angle fitting line L0 and a part of the first theoretical wedge-angle fitting line L1 corresponding to the actual wedge-angle fitting line L0 is less than or equal to 0.07 mrad.

In this implementation, the first theoretical wedge-angle fitting line L1 is a line obtained by fitting multiple theoretical wedge angles when the projection image 114 having no projected secondary image is observed through the eyebox plane EB10 in the range of the section 113 in the projection display region 11. A maximum deviation *Δαmax* between the actual wedge-angle fitting line L0 and the part of the first theoretical wedge-angle fitting line L1 corresponding to the actual wedge-angle fitting line L0 is less than or equal to 0.07 mrad, so that deviation between a wedge angle of each point on the actual wedge-angle fitting line L0 and a theoretical wedge angle required for eliminating a secondary image is relatively small. Therefore, the wedge angle of the projection display region 11 can solve the problem of the projected secondary image when the projection image 114 is observed from the eyebox plane EB10.

Referring to FIG. 8 again, in this implementation, the actual wedge-angle fitting line L0 and the first theoretical wedge-angle fitting line L1 each conform to a polynomial function.

In this implementation, the actual wedge-angle fitting line L0 and the first theoretical wedge-angle fitting line L1 may be a straight line, a curve, a combination of a straight line and a curve, or the like, as long as the actual wedge-angle fitting line L0 and the first theoretical wedge-angle fitting line L1 each conform to a polynomial function. The actual wedge-angle fitting line is smooth everywhere, to prevent an abrupt change in a local wedge angle, thereby avoiding aggravating the projected secondary image.

Referring to FIG. 8 again, in this implementation, the maximum rate of change *(ROC)* of continuous monotonic decrease of the wedge angle in the section 113 satisfies: *ROC* ≤ 0.3 mrad/100 mm; or *ROC* ≤ 0.2 mrad/100 mm; or *ROC* ≤ 0.1 mrad/100 mm; or *ROC* ≤ 0.05 mrad/100 mm.

In this implementation, L0 in FIG. 8 represents a variation line of the wedge angle of each projection display region 11 in the section 113 with the distance from the glass bottom-edge 12 of the laminated glass 10. K1 represents a tangent to L0 at a certain point, and a slope of the tangent indicates an absolute value of the *ROC* of the wedge angle decreasing at the point. If the maximum *ROC* of the wedge angle in the section 113 is too large, the production and manufacturing difficulty of the laminated glass 10 and production cost of the laminated glass 10 may be increased, which is not conductive to production efficiency of the laminated glass 10, thereby affecting the production efficiency of the laminated glass 10. In addition, if the maximum *ROC* of the wedge angle in the section 113 is too large, the abrupt change in local wedge angle may easily occur, thereby aggravating the problem of the projected secondary image. Therefore, the maximum *ROC* of the wedge angle in the section 113 may not be suitable to be too large. Specifically, the maximum *ROC* of continuous non-linear monotonic decrease of the wedge angle in the direction from the lower edge 112 to the upper edge 111 in the section 113 satisfies: *ROC* ≤ 0.3 mrad/100 mm. Preferably, the maximum *ROC* of continuous non-linear monotonic decrease of the wedge angle in the direction from the lower edge 112 to the upper edge 111 in the section 113 satisfies: *ROC* ≤ 0.2 mrad/100 mm. More preferably, the maximum *ROC* of continuous non-linear monotonic decrease of the wedge angle in the direction from the lower edge 112 to the upper edge 111 in the section 113 satisfies: *ROC* ≤ 0.1 mrad/100 mm. Even more preferably, the maximum *ROC* of continuous non-liner monotonic decrease of the wedge angle in the direction from the lower edge 112 to the upper edge 111 in the section 113 satisfies: *ROC* ≤ 0.05 rad/100 mm.

Referring to FIG. 2 again, in this implementation, an angle between any adjacent two of the multiple virtual-image sub-planes TB11 is less than or equal to 15°.

In this implementation, the angle between any two adjacent virtual-image sub-planes TB11 of the multiple virtual-image sub-planes TB11 is less than or equal to 15°, preferably, less than or equal to 10°, more preferably, less than or equal to 5°, and even more preferably, less than or equal to 2°. Among the multiple virtual-image sub-planes TB11, a virtual-image sub-plane TB11 located right in the middle of the multiple virtual-image sub-planes TB11 is taken as an interface. The local discrete distribution degree of the multiple theoretical wedge angles required for eliminating the projected secondary image in the projection display region 11 corresponding to the multiple virtual-image sub-planes TB11 becomes larger and larger from the interface upwards, and the local discrete distribution degree of the multiple theoretical wedge angles required for eliminating the projected secondary image in the projection display region 11 corresponding to the multiple virtual-image sub-planes TB11 also becomes larger and larger from the interface downwards. Therefore, the forward tilted angle of the virtual-image sub-plane TB11 gradually increases from the interface upwards, and the forward tilted angle of the virtual-image sub-plane TB11 gradually increases from the interface downwards, so that the local discrete distribution degree of the multiple theoretical wedge angles required for eliminating the projected secondary image in the projection display region 11 corresponding to the multiple virtual-image sub-planes TB11 is smaller, and the distribution of the multiple theoretical wedge angles is converged towards the actual wedge-angle fitting line L0. In other words, the local range of the multiple theoretical wedge angles is smaller, and the problem of the projected secondary image can be better solved when the projection image 114 is observed from the multiple eyebox sub-planes EB11. In order to enable the driver to have consistent imaging experience when the projection image 114 is observed by the driver at different heights in the cab, the angle between any adjacent two of the multiple virtual-image sub-planes TB11 is less than or equal to 15°, preferably, less than or equal to 10°, more preferably, less than or equal to 5°, and even more preferably, less than or equal to 2°, thereby improving the driving experience.

The angle between two adjacent virtual-image sub-planes TB11 refers to, an angle between an extension line of a connecting line of an upper point and a lower point of one of the two adjacent virtual-image sub-planes TB11 and an extension line of a connecting line of an upper point and a lower point of the other of the two adjacent virtual-image sub-planes TB11.

Referring to FIG. 1 again, in this implementation, in a direction from a glass bottom-edge 12 of the laminated glass 10 to a glass top-edge 13 of the laminated glass 10, a ratio of a length of the section 113 to a length of the projection display region 11 is not less than 70%.

In this implementation, in the direction from the glass bottom-edge 12 of the laminated glass 10 to the glass top-edge 13 of the laminated glass 10, the ratio of the length *d1* of the section 113 to the length *d2* of the projection display region 11 is not less than 70%, and preferably, the ratio of the length of the section 113 to the length of the projection display region 11 is not less than 75%, or not less than 80%, or not less than 85%, or not less than 90%, or not less than 95%, or equal to 100%. The length is measured in a direction proceeding from the lower edge 112 to the upper edge 111.

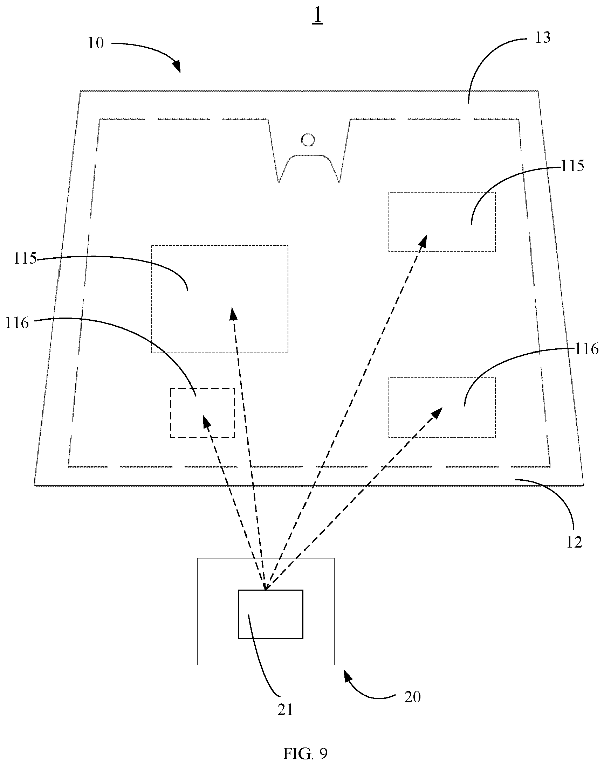

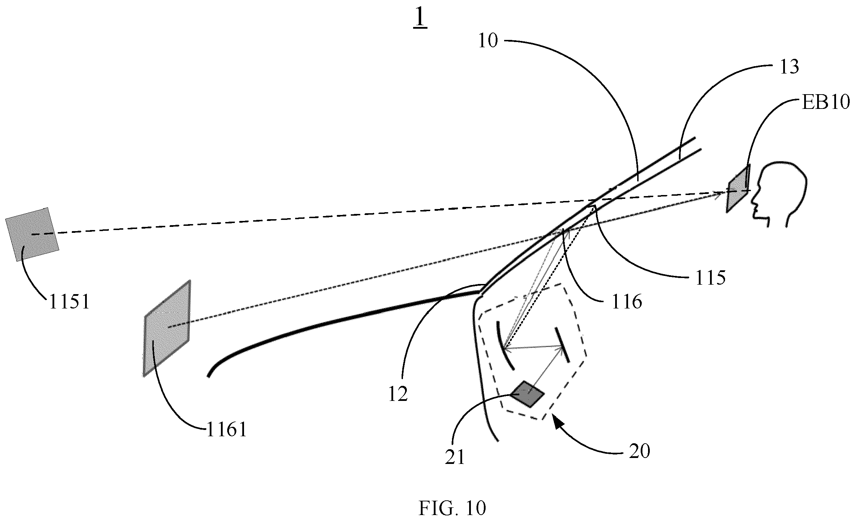

Referring to FIG. 9 and FIG. 10, in this implementation, the at least one projection display region 11 includes at least one first projection-display-region 115 and at least one second projection-display-region 116. The projection light-source 21 is incident onto the at least one first projection-display-region 115 to form a first projection image 1151, and a virtual image distance of the first projection image 1151 ranges from 7 meters to 100 meters. The projection light-source 21 is incident onto the at least one second projection-display-region 116 to form a second projection image 1161. The second projection image 1161 has a virtual image distance of 1 m to 6 m.

In this implementation, the first projection-display-region 115 is used for long-range projection display. Specifically, the first projection-display-region 115 is used for fusing display information and a real scene, and is used for projecting and displaying a complex graphic corresponding to an object in the real world, so that the interaction of road condition-vehicle-driver can be realized. The second projection-display-region 116 is used for short-range projection display. Specifically, the second projection-display-region 116 is used for short-range display for parameter information of vehicle operation, which can reduce times of looking down at a dashboard or related information, facilitate the driver eye to switch between far and near, reduce the times of looking down at the dashboard, concentrate the attention of the driver to the greatest extent when driving, and improve driving safety.

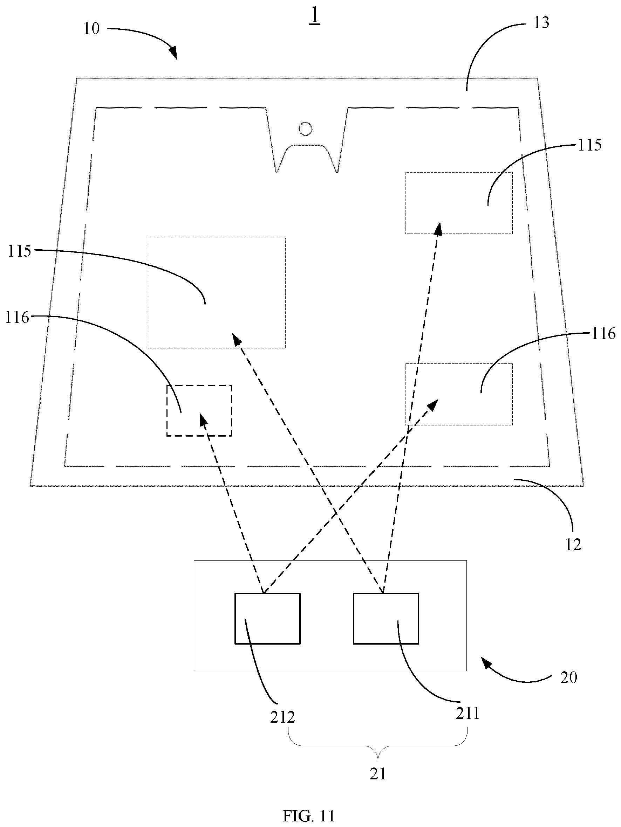

Referring to FIG. 11, in this implementation, the at least one projection light-source 21 includes at least one first projection light-source 211 and at least one second projection light-source 212. The at least one first projection light-source 211 is incident onto the first projection-display-region 115. The at least one second projection light-source 212 is incident onto the second projection-display-region 116.

In this implementation, the first projection light-source 211 is configured to project onto the first projection-display-region 115 for long-range projection display. Specifically, the first projection-display-region 115 is used for fusing display information and a real scene, and is used for projecting and displaying a complex graphic corresponding to an object in the real world, so that the interaction between road conditions-vehicle-driver can be realized. The second projection light-source 212 is configured to project onto the second projection-display-region 116 for short-range projection display. Specifically, the second projection-display-region 116 is used for short-range display for parameter information of vehicle operation, which can reduce times of looking down at the dashboard or related information, facilitate the driver eye to switch between far and near, reduce the times of looking down at the dashboard, concentrate the attention of the driver to the greatest extent when driving, and improve driving safety. In an implementation, the first projection light-source 211 and the second projection light-source 212 are both disposed close to the glass bottom-edge 12. In another implementation, the first projection light-source 211 is disposed close to the glass top-edge 13, so that the projection light emitted by the first projection light-source 211 to the first projection-display-region 115 can maintain an optimal incidence angle. Specifically, the first projection light-source 211 is mounted on an inner surface of a roof of the vehicle. The second projection light-source 212 is disposed close to the glass bottom-edge 12, so that the projection light emitted by the second projection light-source 212 to the second projection-display-region 116 can maintain an optimal incidence angle. Specifically, the second projection light-source 212 is mounted inside a dashboard of the vehicle. It may be noted that, for example, in FIG. 11, both the first projection light-source 211 and the second projection light-source 212 are disposed close to the glass bottom-edge 12. It can be understood that, FIG. 11 does not limit the position of the first projection light-source 211 and the position of the second projection light-source 212.

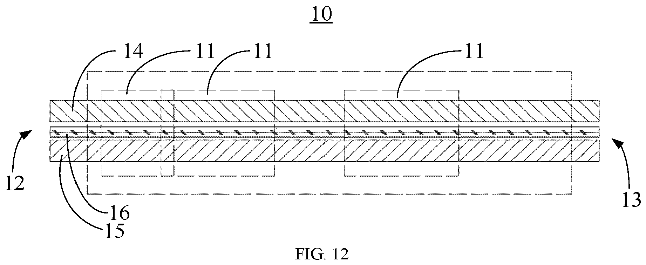

Referring to FIG. 12, in this implementation, the laminated glass 10 includes a first transparent substrate 14, a second transparent substrate 15, and an intermediate adhesive layer 16. The intermediate adhesive layer 16 is disposed between the first transparent substrate 14 and the second transparent substrate 15, and used for adhering the first transparent substrate 14 and the second transparent substrate 15. At least one of the first transparent substrate 14, the second transparent substrate 15, or the intermediate adhesive layer 16 has a wedge angle in the at least one projection display region 11.

In an implementation, the wedge angle in the projection display region 11 may be provided only by the intermediate adhesive layer 16. In other words, the first transparent substrate 14 and the second transparent substrate 15 each have a wedge angle of 0 in the projection display region 11. The intermediate adhesive layer 16 has a wedge angle in the projection display region 11, and the wedge angle of the intermediate adhesive layer 16 in the projection display region 11 is equal to the wedge angle of the projection display region 11.

In another implementation, the wedge angle in the projection display region 11 may be provided by the first transparent substrate 14 and/or the second transparent substrate 15 and the intermediate adhesive layer 16. In other words, the first transparent substrate 14 and/or the second transparent substrate 15 have a wedge angle in the projection display region 11, the intermediate adhesive layer 16 has a wedge angle in the projection display region 11, and a sum of the wedge angle of the first transparent substrate 14 and/or the second transparent substrate 15 in the projection display region 11 and the wedge angle of the intermediate adhesive layer 16 in the projection display region 11 is equal to the wedge angle of the projection display region 11. Considering the production difficulty of the first transparent substrate 14 and/or the second transparent substrate 15, the wedge angle of the first transparent substrate 14 and/or the second transparent substrate 15 is set to be a constant wedge angle.

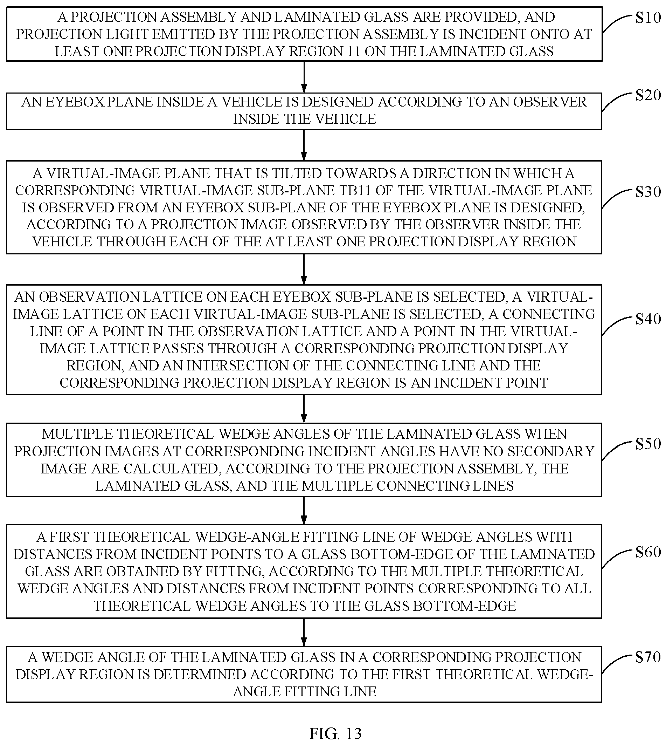

A design method for a head-up display system is further provided in an implementation of the present disclosure. Referring to FIG. 4, FIG. 13, FIG. 14, and FIG. 15, in this implementation, the design method for a head-up display system 1 includes the following. A projection assembly 20 and laminated glass 10 are provided. Projection light emitted by the projection assembly 20 is incident onto at least one projection display region 11 on the laminated glass 10. An eyebox plane EB10 inside a vehicle is designed according to an observer inside the vehicle. A virtual-image plane TB10 that is tilted towards a direction in which a corresponding virtual-image sub-plane TB11 of the virtual-image plane TB10 is observed from an eyebox sub-plane EB11 of the eyebox plane EB10 is designed, according to a projection image observed by the observer inside the vehicle through each of the at least one projection display region 11. The eyebox plane EB10 includes multiple eyebox sub-planes EB11 sequentially from low to high. The virtual-image plane TB10 includes multiple virtual-image sub-planes TB11 sequentially from high to low. Each virtual-image sub-plane TB11 corresponds to one eyebox sub-plane EB11. Each virtual-image sub-plane TB11 includes an upper virtual-image plane TB112 and a lower virtual-image plane TB113. An upper virtual-image plane TB112 and/or a lower virtual-image plane TB113 of each of at least one virtual-image sub-plane TB11 is tilted towards the direction in which the corresponding virtual-image sub-plane TB11 is observed from the eyebox sub-plane EB11, and has a forward tilted angle greater than or equal to 45°. An observation lattice EB111 on each eyebox sub-plane EB11 is selected. A virtual-image lattice TB111 on each virtual-image sub-plane TB11 is selected. A connecting line of a point in the observation lattice EB111 and a point in the virtual-image lattice TB111 passes through a corresponding projection display region 11. An intersection of the connecting line and the corresponding projection display region 11 is an incident point. Multiple theoretical wedge angles of the laminated glass 10 when projection images at corresponding incident angles have no secondary image are calculated, according to the projection assembly 20, the laminated glass 10, and the multiple connecting lines. A first theoretical wedge-angle fitting line L1 of wedge angles with distances from incident points to a glass bottom-edge 12 of the laminated glass 10 are obtained by fitting, according to the multiple theoretical wedge angles and distances from incident points corresponding to all theoretical wedge angles to the glass bottom-edge 12. A wedge angle of the laminated glass 10 in a corresponding projection display region 11 is determined according to the first theoretical wedge-angle fitting line L1.

In this implementation, the laminated glass 10 is used as a front windshield of the vehicle, and is applied to the head-up display system 1 of the vehicle. A design method of laminated glass 10 includes S10, S20, S30, S40, S50, S60, and S70. S10, S20, S30, S40, S50, S60, and S70 will be described in detail below.

S10, a projection assembly 20 and laminated glass 10 are provided. Projection light emitted by the projection assembly 20 is incident onto at least one projection display region 11 on the laminated glass 10.

S20, an eyebox plane EB10 inside a vehicle is designed according to an observer inside the vehicle.

S30, a virtual-image plane TB10 that is tilted towards a direction in which a corresponding virtual-image sub-plane TB11 of the virtual-image plane TB10 is observed from an eyebox sub-plane EB11 of the eyebox plane EB10 is designed, according to a projection image observed by the observer inside the vehicle through each of the at least one projection display region 11.

In this implementation, the eyebox plane EB10 includes multiple eyebox sub-planes EB11 sequentially from low to high. The virtual-image plane TB10 includes multiple virtual-image sub-planes TB11 sequentially from high to low. Each virtual-image sub-plane TB11 corresponds to one eyebox sub-plane EB10. Specifically, the eyebox plane EB10 is used for simulating a plane on which the observer eye is located when the observer sits in a cab of the vehicle. The multiple eyebox sub-planes EB11 are used for simulating that the observer eye is at different heights, that is, the multiple eyebox sub-planes EB11 are used for simulating different viewing angles of the observer. At least part of the projection light is reflected by the projection display region 11 and then enters the eyebox plane EB10, thereby forming the projection image 114 in front of the laminated glass 10 of the vehicle. The projection image 114 has the virtual-image plane TB10. The projection light forming the projection image 114 enters the eyebox sub-planes EB11 at different positions, so that the projection image 114 has virtual-image sub-planes TB11 at different positions.

Each virtual-image sub-plane TB11 includes the upper virtual-image plane TB112 and the lower virtual-image plane TB113. For each virtual-image sub-plane TB11, a connecting line is drawn between a central point of the virtual-image sub-plane TB11 and a central point of the corresponding eyebox sub-plane EB11, and a straight line that is parallel to the ground and perpendicular to the direction in which the corresponding virtual-image sub-plane TB11 is observed from the eyebox sub-plane EB11 is drawn through the central point of the virtual-image sub-plane TB11. A plane formed by the connecting line and the straight line is a reference plane. A part of the virtual-image sub-plane TB11 located above the reference plane is the upper virtual-image plane TB112. A part of the virtual-image sub-plane TB11 located below the reference plane is the lower virtual-image plane TB113.

The upper virtual-image plane TB112 of the virtual-image sub-plane TB11 is tilted towards the direction in which the corresponding virtual-image sub-plane TB11 is observed from the eyebox sub-plane EB11, that is, the projection image 114 is locally tilted forward. Therefore, a distance between the upper virtual-image plane TB112 and the eyebox sub-plane EB11 corresponding to the virtual-image sub-plane TB11 is increased, thereby reducing the theoretical wedge angle required for eliminating the secondary image corresponding to the upper virtual-image plane TB112. Further, the local discrete distribution degree of the multiple theoretical wedge angles of the projection display region 11 is reduced, so that the distribution of the multiple theoretical wedge angles is converged towards the first theoretical wedge-angle fitting line L1, that is, a local range of the multiple theoretical wedge angles is reduced.

The lower virtual-image plane TB113 of the virtual-image sub-plane TB11 is tilted towards the direction in which the corresponding virtual-image sub-plane is observed from the eyebox sub-plane, that is, the projection image 114 is locally tilted forward. Therefore, a distance between the lower virtual-image plane TB113 and the eyebox sub-plane EB11 corresponding to the virtual-image sub-plane TB11 is reduced, thereby increasing the theoretical wedge angle required for eliminating the secondary image corresponding to the upper virtual-image plane TB112. Further, the local discrete distribution degree of the multiple theoretical wedge angles of the projection display region 11 is reduced, so that the distribution of the multiple theoretical wedge angles is converged towards the first theoretical wedge-angle fitting line L1, that is, a local range of the multiple theoretical wedge angles is reduced.

Both the upper virtual-image plane TB112 and the lower virtual-image plane TB113 of the virtual-image sub-plane TB11 are tilted towards the direction in which the corresponding virtual-image sub-plane is observed from the eyebox sub-plane, that is, the whole projection image 114 is tilted forward. Therefore, the whole discrete distribution degree of the multiple theoretical wedge angles of the projection display region 11 can be reduced, so that the distribution of the multiple theoretical wedge angles is converged towards the first theoretical wedge-angle fitting line L1, that is, the local range of the multiple theoretical wedge angles is reduced.

Therefore, by tilting the upper virtual-image plane TB112 and/or the lower virtual-image plane TB113 of the virtual-image sub-plane TB11 towards the direction in which the corresponding virtual-image sub-plane TB11 is observed from the eyebox sub-plane EB11, the effect of the head-up display system 1 in eliminating the secondary image is finally improved.

When the forward tilted angle of the upper virtual-image plane TB112 is larger and the forward tilted angle of the lower virtual-image plane TB113 is larger, the discrete distribution degree of the multiple theoretical wedge angles required by the projection display region 11 for eliminating the secondary image is smaller. In addition, the forward tilted angle may be adjusted by the projection assembly 20, for example, the forward tilted angle of the upper virtual-image plane TB112 and the forward tilted angle of the lower virtual-image plane TB113 can be set by adjusting a tilted angle of a curved surface of a mirror and a tilted angle of a surface of a PGU in the projection assembly 20.

In addition, when the upper virtual-image plane TB112 and/or the lower virtual-image plane TB113 is tilted towards the direction in which the corresponding virtual-image sub-plane TB11 is observed from the eyebox sub-plane EB11 and has a large forward tilted angle, the upper virtual-image plane TB112 and/or the lower virtual-image plane TB113 is approximately tiled on the ground, so that the driver can feel a better ground feel and augmented reality when the driver observes the projection image 114, thereby improving driving experience.

Specifically, the upper virtual-image plane TB112 and/or the lower virtual-image plane TB113 of each of at least one of the virtual-image sub-planes TB11 is tilted towards the direction in which the corresponding virtual-image sub-plane TB11 is observed from the eyebox sub-plane EB11, and has the forward tilted angle greater than or equal to 45°, or greater than or equal to 60°, or greater than or equal to 75°, or greater than or equal to 90° and less than or equal to 95°, so that the secondary image phenomenon in the projection display region 11 can be significantly reduced.

It may be noted that, each virtual-image sub-plane TB11 designed is a flat plane (referring to (A) in FIG. 4) or a curved plane (referring to (B) and (C) in FIG. 4). A connecting line is drawn between a central point of each eyebox sub-plane EB11 and a central point of the corresponding virtual-image sub-plane TB11, and a plane that passes through the connecting line and is perpendicular to the ground is taken as a primary-optical-axis plane. An intersecting line of the primary-optical-axis plane and the corresponding virtual-image sub-plane TB11 has an upper point and a lower point. A forward tilted angle *α_{U}* of the upper virtual-image plane TB112 is an angle between a connecting line of the upper point and the central point of the corresponding virtual-image sub-plane TB11 and the vertical plane, where the connecting line is tilted towards the direction in which the corresponding virtual-image sub-plane TB11 is observed from the eyebox sub-plane EB11. A forward tilted angle *α_{L}* of the lower virtual-image plane TB113 is an angle between a connecting line of the lower point and the central point of the corresponding virtual-image sub-plane TB11 and the vertical plane, where the connecting line is tilted towards the direction in which the corresponding virtual-image sub-plane TB11 is observed from the eyebox sub-plane EB11. A forward tilted angle *α₀* of the virtual-image sub-plane TB11 is an angle between a connecting line of the upper point and the lower point and the vertical plane, where the connecting line is tilted towards the direction in which the corresponding virtual-image sub-plane TB11 is observed from the eyebox sub-plane EB11. The vertical plane is a plane perpendicular to the ground and perpendicular to the direction in which the corresponding virtual-image sub-plane TB11 is observed from the eyebox sub-plane EB11.

S40, an observation lattice EB111 on each eyebox sub-plane EB11 is selected, and a virtual-image lattice TB111 on each virtual-image sub-plane TB11 is selected. A connecting line of a point in the observation lattice EB111 and a point in the virtual-image lattice TB111 passes through a corresponding projection display region 11. An intersection of the connecting line and the corresponding projection display region 11 is an incident point.

In this implementation, an observation lattice EB111 of *m*×*n* is selected on each eyebox sub-plane EB11, where *m* ≥ 1 and is a natural number, and *n* ≥ 1 and is a natural number. For example, *m* may be, but is not limited to, 3, 5, or 8, etc., and *n* may be, but is not limited to, 3, 5, or 8, etc. A virtual-image lattice TB111 of *i*×*j* is selected on each virtual-image sub-plane TB11, where *i* ≥ 1 and is a natural number, and *j* ≥ 1 and is a natural number. For example, *i* may be, but is not limited to, 3, 5, or 8, etc., and *j* may be, but is not limited to, 3, 5, or 8, etc.

In this implementation, each point in the observation lattice EB111 corresponds to a position simulating the observer eye. Each point in the virtual-image lattice TB111 corresponds to a virtual image formed on the virtual-image plane by simulating reflection of the projection light reflected on the laminated glass 10 to a certain point on the eyebox plane EB10. Specifically, each point in the virtual-image lattice TB111 corresponds to one or more points in the observation lattice EB111. In other words, at different positions on the eyebox sub-plane EB11, the observer can see a virtual image that is at the same position on the virtual-image sub-plane TB11. In addition, at the same position on the eyebox sub-plane EB11, the observer can see virtual images at different positions on the virtual-image sub-plane.

S50, multiple theoretical wedge angles of the laminated glass 10 when projection images at corresponding incident angles have no secondary image are calculated, according to the projection assembly 20, the laminated glass 10, and the multiple connecting lines.

In this implementation, in each eyebox sub-planes EB11 and each virtual-image sub-plane TB11 that are set in correspondence, an intersection of the laminated glass 10 and a connecting line of each point in the observation lattice EB111 and each point in the virtual-image lattice TB111 is an incident point. A theoretical wedge angle at a corresponding incident point is calculated, when a virtual image on the virtual-image sub-plane viewed by the observer from each point in the observation lattice EB111 has no secondary image. The number of incident points used for the simulation calculation is the number of the theoretical wedge angles.

S60, a first theoretical wedge-angle fitting line L1 of wedge angles with distances from incident points to a glass bottom-edge 12 of the laminated glass 10 are obtained by fitting, according to the multiple theoretical wedge angles and distances from incident points corresponding to all theoretical wedge angles to the glass bottom-edge 12.

In this implementation, the multiple first theoretical-wedge-angles present a discrete distribution with respect to the distance from the incident point to the glass bottom-edge 12 of the laminated glass 10. Specifically, in an implementation, for each eyebox sub-plane EB11 and each virtual-image sub-plane TB11 that are set in correspondence, multiple discrete sub-graphs T11 of the multiple virtual-image sub-planes TB11 can be calculated, and then the multiple discrete sub-graphs are collected in the same coordinate system to form a discrete graph. The first theoretical wedge-angle fitting line L1 is obtained by performing function fitting on the discrete graph of the multiple virtual-image sub-planes. For example, the function may be, but is not limited to, a polynomial function such as a first order, a second order, a third order, etc., or a basic function such as a linear function, an exponential function, a power function, or a logarithmic function, as well as a composite function composed thereof. The data curve can be fitted in software such as Microsoft Excel^{®}, WPS^{®}, MATLAB^{®}, OriginPro^{®}, etc. Since the observer can see multiple images at different distances or angles at a certain point on the laminated glass 10, there are multiple theoretical-wedge-angles at the point. However, the wedge angle at a certain point on the laminated glass 10 can only have one value. In addition, in the direction from the glass bottom-edge 12 to the glass top-edge 13, for each of other points with the same distance from the point to the glass bottom-edge 12, there are also multiple theoretical wedge angles. The wedge angle of the laminated glass 10 at a certain distance from the glass bottom-edge 12 is suitable to have one value. Therefore, it is necessary to appropriately select wedge angles at each incident point on the laminated glass 10 to reduce the secondary image phenomenon. By performing function fitting on the multiple theoretical wedge angles, the wedge angle of the laminated glass 10 in the projection display region 11 is less deviated from the multiple theoretical wedge angles. Therefore, the projected secondary image phenomenon projected onto the projection display region 11 of the laminated glass 10 is reduced, so as to improve the imaging quality of the laminated glass 10.

Specifically, the wedge angle (*Y_{HUD}*) is set vary with distance (X) from the glass bottom-edge 12 to the glass top-edge. The mathematical expression of the first theoretical wedge-angle fitting line L1 set may be in various forms, for example, *Y_{HUD} = Aₙ* × *X^ⁿ + A₍ₙ₋₁₎* × *X^⁽ⁿ⁻¹⁾ +... +A₁* × *X+ B* (where *B* represents a wedge angle when *X =* 0). Generally, n = 1 ~ 4 can be set, that is, the mathematical expression of the first theoretical wedge-angle fitting line L1 is a first-order function to a fourth-order function. In addition, for some specific points or for the distribution weights of people of different heights and sitting postures, different weights can be set to reflect to the corresponding theoretical wedge angle scatters. For example, the number of the multiple eyebox sub-planes EB11 is three, fitting weights of theoretical wedge angles corresponding to the multiple eyebox sub-planes EB11 with corresponding height distributions from high to low may be set as 1: 1: 1 (that is, eyebox sub-planes EB11 with various heights have the same weight), 3: 2: 2 (that is, an eyebox sub-plane EB11 with the highest height has a heavier weight), 2: 2: 3 (that is, an eyebox sub-plane EB11 with the lowest height has a heavier weight), 2: 3: 2 (that is, an eyebox sub-plane EB11 in the middle has a heavier weight).

In another implementation, for multiple theoretical wedge angles corresponding to each incident point, an average of a maximum and a minimum of the multiple theoretical wedge angles corresponding to each incident point is selected, and then averages corresponding to all incident points are connected to form the first theoretical wedge-angle fitting line L1.

S70, a wedge angle of the laminated glass 10 in a corresponding projection display region 11 is determined according to the first theoretical wedge-angle fitting line L1.

In this implementation, the wedge angle of the laminated glass 10 in the corresponding projection display region 11 is determined according to the first theoretical wedge-angle fitting line L1, so as to reduce the projected secondary image phenomenon of the laminated glass 10 in the projection display region 11 observed from the eyebox plane EB10. Specifically, by selecting and designing the virtual-image plane TB10, distribution of the multiple theoretical wedge angles of the projection display region 11 on the laminated glass 10 can be calculated, and the first theoretical wedge-angle fitting line L1 corresponding to the projection display region 11 can be fitted, so that the wedge angle of the laminated glass 10 in the corresponding projection display region 11 can be determined.

In the design method for a head-up display system 1 provided in an implementation of the present disclosure, the upper virtual-image plane TB112 and/or the lower virtual-image plane TB113 of each of the at least one virtual-image sub-plane TB11 is tilted towards the direction in which the corresponding virtual-image sub-plane TB11 is observed from the eyebox sub-plane EB11, and had the forward tilted angle greater than or equal to 45°. Therefore, the local discrete distribution degree of the multiple theoretical wedge angles required for eliminating the secondary image corresponding to the region of the projection display region 11 is reduced, so that the distribution of the multiple theoretical wedge angles is converged towards the first theoretical wedge-angle fitting line L1, that is, the local range of the multiple theoretical wedge angles is reduced, and thus the effect of the head-up display system 1 in eliminating the secondary image is improved. In addition, the upper virtual-image plane TB112 and/or the lower virtual-image plane TB113 of each of the at least one virtual-image sub-plane TB11 is approximately tiled on the ground, so that the driver can feel a better ground feel and augmented reality when the driver observes the projection image 114, thereby improving driving experience.

Referring to FIG. 5 again, in this implementation, designing the virtual-image plane TB10 that is tilted towards the direction in which the corresponding virtual-image sub-plane TB11 of the virtual-image plane TB10 is observed from the eyebox sub-plane EB11 of the eyebox plane EB10, according to the projection image 114 observed by the observer inside the vehicle through each of the at least one projection display region 11, includes the following. At least one virtual-image sub-plane TB11 is designed to be tilted towards the direction in which the corresponding virtual-image sub-plane TB11 is observed from the eyebox sub-plane EB11 and to have a forward tilted angle greater than or equal to 45°. For example, in FIG. 5, the virtual-image sub-plane TB11 is concave towards the ground. It can be understood that, FIG. 5 does not limit the shape of the virtual-image sub-plane TB11.

On the primary-optical-axis plane, the forward tilted angle *α₀* of each of at least one virtual-image sub-plane TB11 of the multiple virtual-image sub-planes TB11 is greater than or equal to 45°, or greater than or equal to 60°, or greater than or equal to 75°, or equal to 90° (being flush with the ground), so that the whole projection image 114 can be tilted forward, and the secondary image phenomenon in the projection display region 11 can be significantly reduced. In addition, in some special scenarios, the forward tilted angle *α₀* of each of at least one virtual-image sub-plane is greater than 90° and less than or equal to 95°.

Referring to FIG. 3 again, in this implementation, an intersecting line of the primary-optical-axis plane and the corresponding virtual-image sub-plane TB11 has an upper point and a lower point. A distance between the upper point of the virtual-image sub-plane TB11 and the central point of the corresponding eyebox sub-plane EB11 is *VID1.* A distance between the lower point of the virtual-image sub-plane TB11 and the central point of the corresponding eyebox sub-plane EB11 is *VID2.* Designing the virtual-image plane TB10 that is tilted towards the direction in which the corresponding virtual-image sub-plane TB11 of the virtual-image plane TB10 is observed from the eyebox sub-plane EB11 of the eyebox plane EB10, according to the projection image 114 observed by the observer inside the vehicle through each of the at least one projection display region 11, includes the following. When the upper virtual-image plane and/or the lower virtual-image plane of each virtual-image sub-plane is tilted towards the direction in which the corresponding virtual-image sub-plane is observed from the eyebox sub-plane, *VID1 > VID2,* thereby reducing the projected secondary image.

Referring to FIG. 3 and FIG. 7 again, in this implementation, the upper virtual-image plane TB112 and/or the lower virtual-image plane TB113 of the virtual-image sub-plane TB11 is tilted towards the direction in which the corresponding virtual-image sub-plane TB11 is observed from the eyebox sub-plane EB11, and *VID1*/*VID2* ≥ 1.5.

On the primary-optical-axis plane (referring to FIG. 3), an angle between a connecting line of a central point of the eyebox sub-plane EB11 and a central point of the corresponding virtual-image sub-plane TB11 and the ground is a look down angle *LDA.* When the central point of the virtual-image sub-plane TB11 is located below the central point of the eyebox sub-plane EB11, the look down angle *LDA* is a negative value, otherwise a positive value. An angle between a connecting line between the central point of the eyebox sub-plane EB11 and an upper point of the corresponding virtual-image sub-plane TB11 and a connecting line between the central point of the eyebox sub-plane EB11 and a lower point of the corresponding virtual-image sub-plane TB11 is a vertical field-of-view *VFOV.*

For example, the look down angle *LDA* = -1.5/-2.5/-3.5/-4.5 deg, the vertical field-of-view *VFOV =* 2.5/3.0/3.5/4.0/4.5/5.0/5.5/6.0 deg (referring to FIG. 7), and the relationship between *VID1*/*VID2* and the forward tilted angle of the virtual-image sub-plane TB11 is simulated. The horizontal coordinate represents the forward tilted angle of the virtual-image sub-plane TB11, the vertical coordinate represents *VID1*/*VID2,* and each line represents a situation in which one look down angle *LDA* corresponds to one vertical field-of-view *VFOV.* It can be seen from the simulation results that, when the vertical field-of-view *VFOV* is greater, the ratio of *VID1* to *VID2* is greater, so that the distribution of the multiple theoretical wedge angles for eliminating the projected secondary image is more converged, and the effect of reducing the corresponding secondary image is more obvious.

In addition, on condition that the look down angle *LDA* is constant, when the forward tilted angle of the virtual-image sub-plane TB11 is greater, the ratio of *VID1*/*VID2* is greater, and the effect of reducing the corresponding secondary image is more obvious.

In addition, when *VID1*/*VID2* ≥ 1.5, the forward tilted angle of the corresponding virtual-image sub-plane TB11 is greater than or equal to 75°, so that the effect of reducing the corresponding secondary image is more obvious, and a better ground feel and augmented reality can also be brought about.

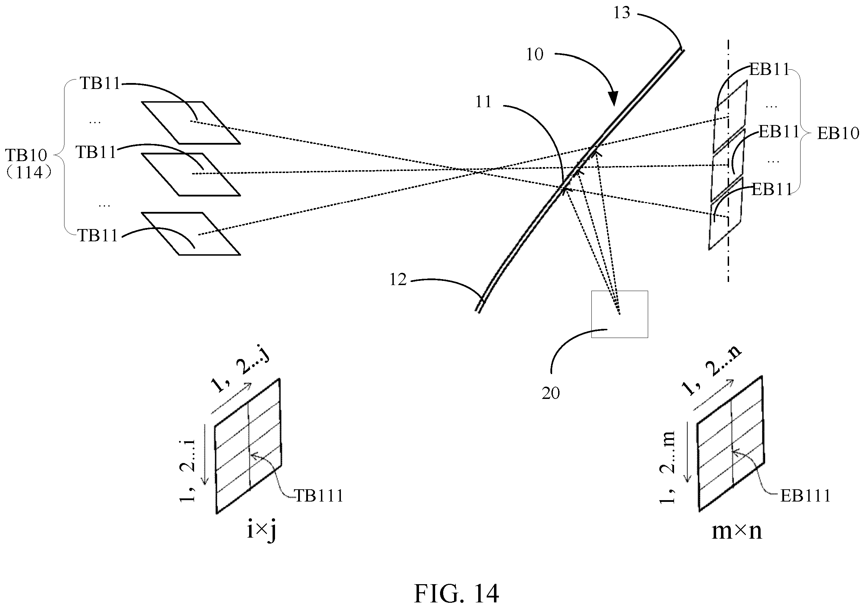

Referring to FIG. 14 again, in this implementation, designing the virtual-image plane TB10 that is tilted towards the direction in which the corresponding virtual-image sub-plane TB11 of the virtual-image plane TB10 is observed from the eyebox sub-plane EB11 of the eyebox plane EB10, according to the projection image 114 observed by the observer inside the vehicle through each of the at least one projection display region 11, includes the following. An angle between any adjacent two of the multiple virtual-image sub-planes TB11 is designed to be less than or equal to 15°.

In this implementation, the angle between any adjacent two of the multiple virtual-image sub-planes TB11 is less than or equal to 15°, preferably, less than or equal to 10°, more preferably, less than or equal to 5°, and even more preferably, less than or equal to 2°. Among the multiple virtual-image sub-planes TB11, a virtual-image sub-plane TB11 located right in the middle of the multiple virtual-image sub-planes TB11 is taken as an interface. The local discrete distribution degree of the multiple theoretical wedge angles required for eliminating the secondary image in the projection display region 11 corresponding to the multiple virtual-image sub-planes TB11 becomes larger and larger from the interface upwards, and the local discrete distribution degree of the multiple theoretical wedge angles required for eliminating the projected secondary image in the projection display region 11 corresponding to the multiple virtual-image sub-planes TB11 also becomes larger and larger from the interface downwards. Therefore, the forward tilted angle of the virtual-image sub-plane TB11 gradually increases from the interface upwards, and the forward tilted angle of the virtual-image sub-plane TB11 gradually increases from the interface downwards, so that the local discrete distribution degree of the multiple theoretical wedge angles required for eliminating the projected secondary image in the projection display region 11 corresponding to the multiple virtual-image sub-planes TB11 is smaller, and the distribution of the multiple theoretical wedge angles is converged towards the first theoretical wedge-angle fitting line L1. In other words, the local range of the multiple theoretical wedge angles is smaller, and the problem of the projected secondary image can be better solved when the projection image 114 is observed from the multiple eyebox sub-planes EB11. In order to enable the driver to have consistent imaging experience when the projection image 114 is observed by the driver at different heights in the cab, the angle between any adjacent two of the multiple virtual-image sub-planes TB11 is less than or equal to 15°, preferably, less than or equal to 10°, more preferably, less than or equal to 5°, and even more preferably, less than or equal to 2°, thereby improving the driving experience.

The angle between two adjacent virtual-image sub-planes TB11 refers to, an angle between an extension line of a connecting line of an upper point and a lower point of one of the two adjacent virtual-image sub-planes TB11 and an extension line of a connecting line of an upper point and a lower point of the other of the two adjacent virtual-image sub-planes TB11.

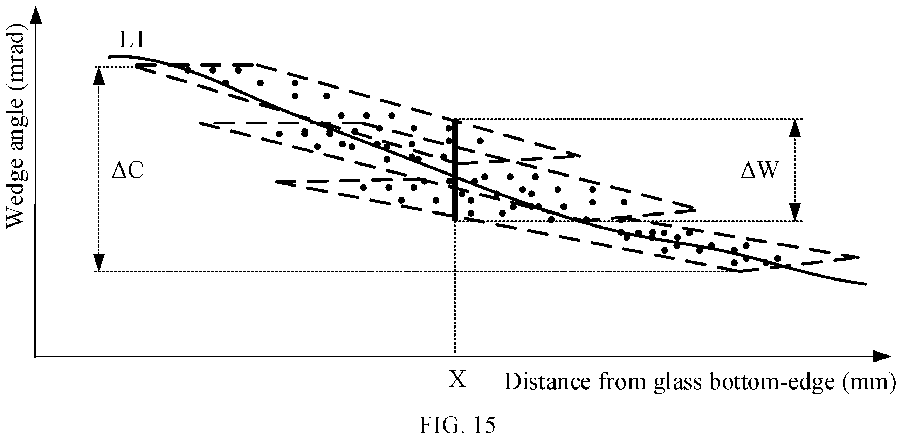

Referring to FIG. 15 again, in this implementation, a ratio of a maximum local range *ΔW* of the multiple theoretical wedge angles to a global range *ΔC* of the multiple theoretical wedge angles satisfies: *ΔW*/*ΔC* ≤ 0.9.

The ratio of the maximum local range *ΔW* of the multiple theoretical wedge angles to the overall range *ΔC* of the multiple theoretical wedge angles satisfies: *ΔW*/*ΔC* ≤ 0.9. Therefore, the dispersion of the multiple theoretical wedge angles may be smaller to increase the smoothness of the theoretical wedge-angle fitting line, that is, the slope of the theoretical wedge-angle fitting line is reduced, thereby reducing the *ROC* of the wedge angle of the laminated glass 10, and reducing the production difficulty of the laminated glass 10. It may be noted that, the maximum local range *ΔW* of the multiple theoretical wedge angles refers to a maximum among the local ranges. The local range is a difference between a maximum theoretical wedge angle and a minimum theoretical wedge angle at a certain position where the distance from the glass bottom-edge 12 of the laminated glass 10 is *X.* The overall range *ΔC* of the multiple theoretical wedge angles is a difference between a maximum and a minimum among all theoretical wedge angles.

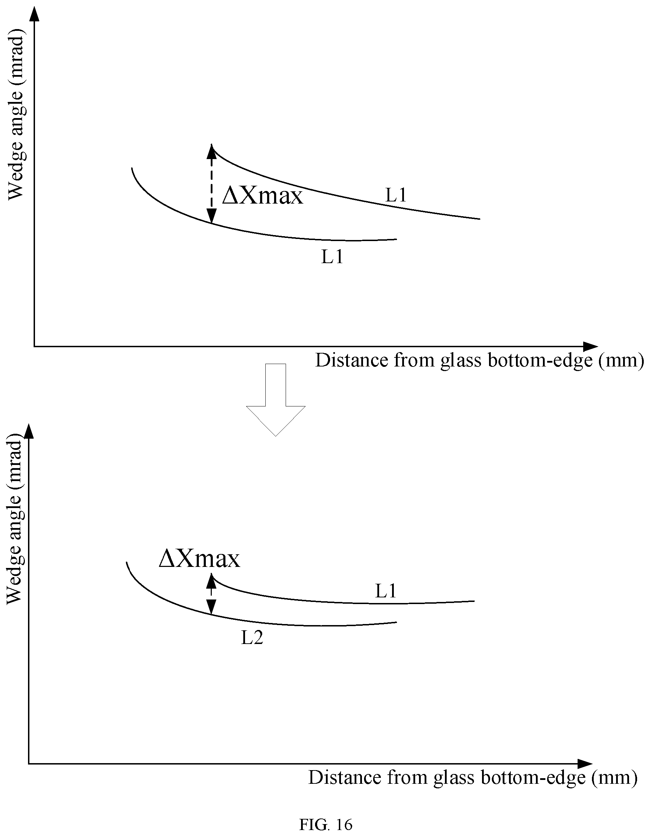

Referring to FIG. 9, FIG. 13, and FIG. 16, in this implementation, the at least one projection display region 11 includes at least two first projection-display-regions 115 or at least two second projection-display-regions 116. At least two first theoretical wedge-angle fitting lines L1 of wedge angles with distances from incident points to the glass bottom-edge 12 are obtained by fitting. When a maximum deviation *ΔXmax* of any two adjacent first theoretical wedge-angle fitting lines L1 of the at least two first theoretical wedge-angle fitting lines L1 is greater than 0.15 mrad, after determining the wedge angle of the laminated glass 10 in the corresponding projection display region 11 according to the first theoretical wedge-angle fitting line L1, the design method for a head-up display system 1 further includes the following. A distance between the eyebox plane EB10 and a virtual-image plane TB10 corresponding to one of the any two adjacent first theoretical wedge-angle fitting lines L1 is adjusted. Multiple new theoretical wedge angles are recalculated. A second theoretical wedge-angle fitting line L2 of wedge angles with distances from incident points to the glass bottom-edge 12 of the laminated glass 10 is obtained by fitting, according to the multiple new theoretical wedge angles and distances from incident points corresponding to the theoretical wedge angles to the glass bottom-edge 12. It is determined whether a maximum deviation *ΔXmax* between the second theoretical wedge-angle fitting line L2 and the other of the any two adjacent first theoretical wedge-angle fitting lines L1 is less than or equal to 0.15 mrad. If the maximum deviation *ΔXmax* between the second theoretical wedge-angle fitting line L2 and the other of the any two adjacent first theoretical wedge-angle fitting lines L1 is not less than or equal to 0.15 mrad, the above operations are repeated. If the maximum deviation *ΔXmax* between the second theoretical wedge-angle fitting line L2 and the other of the any two adjacent first theoretical wedge-angle fitting lines L1 is less than or equal to 0.15 mrad, a wedge angle of the laminated glass 10 in a corresponding first projection-display-region 115 or a corresponding second projection-display-region 116 is determined according to the second theoretical wedge-angle fitting line L2.

In this implementation, when the two adjacent first theoretical wedge-angle fitting lines L1 have overlapping portions, the maximum deviation *ΔXmax* is equal to the maximum among differences between the two first theoretical wedge-angle fitting lines L1 in the overlapping portions. When the two adjacent first theoretical wedge-angle fitting lines L1 have no overlapping portions, the maximum deviation *ΔXmax* is equal to the difference between wedge angles at the closest two ends of the two first theoretical wedge-angle fitting lines L1.

When the maximum deviation *ΔXmax* is greater than 0.15 mrad, it is necessary to adjust the distance between the eyebox plane EB10 and a virtual-image plane TB10 corresponding to any one of the two adjacent first theoretical wedge-angle fitting lines L1, so that the maximum deviation *ΔXmax* of one of the two adjacent first theoretical wedge-angle fitting lines L1 designed and the second theoretical wedge-angle fitting line L2 adjusted is adjusted to be less than or equal to 0.15 mrad, or less than or equal to 0.10 mrad, or less than or equal to 0.08 mrad, or less than or equal to 0.05 mrad.

Specifically, after determining the wedge angle of the laminated glass 10 in the corresponding projection display region 11 according to the first theoretical wedge-angle fitting line L1, at least one of the two adjacent first theoretical wedge-angle fitting lines L1 needs to be adjusted.

A distance between the eyebox plane EB10 and a virtual-image plane TB10 corresponding to one of the two adjacent first theoretical wedge-angle fitting lines L1 is adjusted.

By adjusting the distance between the eyebox plane EB10 and the virtual-image plane TB10 corresponding to one of the two adjacent first theoretical wedge-angle fitting lines L1, the wedge angle required for eliminating the projected secondary image can be adjusted. Under the same condition, when the distance between the eyebox plane EB10 and the virtual-image plane TB10 corresponding to one of the two adjacent first theoretical wedge-angle fitting lines L1 is larger, the wedge angle required for eliminating the projected secondary image is smaller. In this implementation, the distance between the virtual-image plane TB10 corresponding to one of the two adjacent first theoretical wedge-angle fitting lines L1 and the eyebox plane EB10 may be increased, and/or the distance between the virtual-image plane TB10 corresponding to the other of the two first theoretical wedge-angle fitting lines L1 and the eyebox plane EB10 may be decreased, so that the two adjacent first theoretical wedge-angle fitting lines L1 are closer to the design target.

The multiple new theoretical wedge angles are recalculated.

In this implementation, after adjusting the distance between the virtual-image plane TB10 and the eyebox plane EB10, the multiple theoretical wedge angles calculated by means of the calculation method in the above implementation can be fitted to a fitting line closer to the design target.

A second theoretical wedge-angle fitting line L2 of wedge angles with distances from incident points to the glass bottom-edge 12 is obtained by fitting, according to the multiple new theoretical wedge angles and distances from incident points corresponding to the theoretical wedge angles to the glass bottom-edge 12.

It is determined whether a maximum deviation *ΔXmax* between the second theoretical wedge-angle fitting line L2 and the other of the any two adjacent first theoretical wedge-angle fitting lines L1 is less than or equal to 0.15 mrad.

In this implementation, it is determined whether the maximum deviation *ΔXmax* between the second theoretical wedge-angle fitting line L2 and the other of the any two adjacent first theoretical wedge-angle fitting lines L1 is less than or equal to 0.15 mrad. If the maximum deviation *ΔXmax* between the second theoretical wedge-angle fitting line L2 and the other of the any two adjacent first theoretical wedge-angle fitting lines L1 is not less than or equal to 0.15 mrad, the above adjustment operations are repeated. If the maximum deviation *ΔXmax* between the second theoretical wedge-angle fitting line L2 and the other of the any two adjacent first theoretical wedge-angle fitting lines L1 is less than or equal to 0.15 mrad, a wedge angle is selected.

A wedge angle of the laminated glass 10 in a corresponding first projection-display-region 115 or a corresponding second projection-display-region 116 is determined according to the second theoretical wedge-angle fitting line L2.

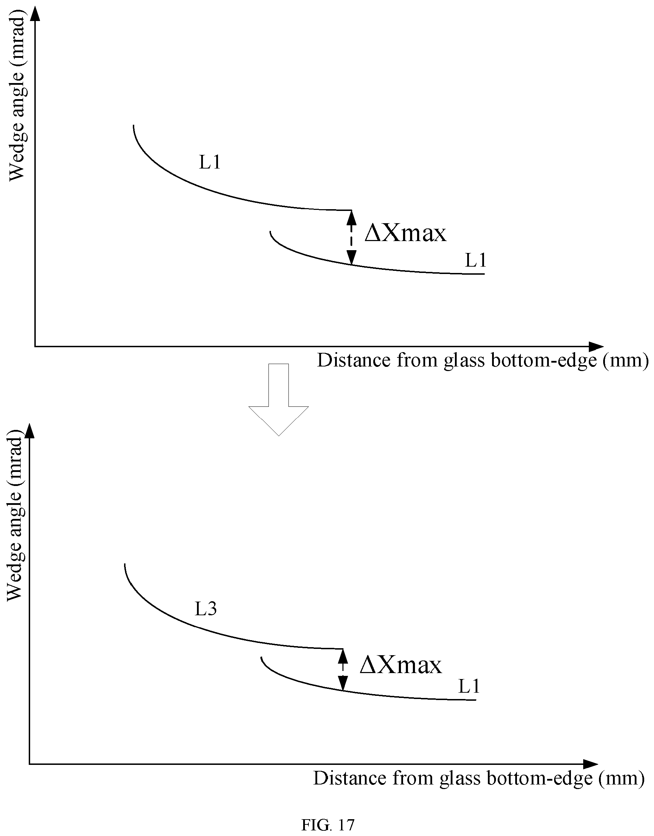

Referring to FIG. 9, FIG. 13, and FIG. 17, in this implementation, the at least one projection display region 11 includes at least one first projection-display-region 115 and at least one second projection-display-region 116. At least two first theoretical wedge-angle fitting lines L1 of wedge angles with distances from incident points to the glass bottom-edge 12 are obtained by fitting. When a maximum deviation *ΔXmax* of any two adjacent first theoretical wedge-angle fitting lines L1 is greater than 0.2 mrad, after determining the wedge angle of the laminated glass 10 in the corresponding projection display region 11 according to the first theoretical wedge-angle fitting line L1, the design method for a head-up display system 1 further includes the following. A distance between the eyebox plane EB10 and a virtual-image plane TB10 corresponding to one of the two adjacent first theoretical wedge-angle fitting lines L1 is adjusted. Multiple new theoretical wedge angles are recalculated. A third theoretical wedge-angle fitting line L3 of wedge angles with distances from incident points to the glass bottom-edge 12 is obtained by fitting, according to the multiple new theoretical wedge angles and distances from incident points corresponding to the multiple new theoretical wedge angles to the glass bottom-edge 12. It is determined whether a maximum deviation *ΔXmax* between the third theoretical wedge-angle fitting line L3 and the other of the two adjacent first theoretical wedge-angle fitting lines L1 is less than or equal to 0.15 mrad. If the maximum deviation *ΔXmax* between the third theoretical wedge-angle fitting line L3 and the other of the two adjacent first theoretical wedge-angle fitting lines L1 is not less than or equal to 0.15 mrad, the above operations are repeated. If the maximum deviation *ΔXmax* between the third theoretical wedge-angle fitting line L3 and the other of the two adjacent first theoretical wedge-angle fitting lines L1 is less than or equal to 0.15 mrad, a wedge angle of the laminated glass 10 in a corresponding first projection-display-region 115 or a corresponding second projection-display-region 116 is determined, according to the third theoretical wedge-angle fitting line L3.

In this implementation, when the two adjacent first theoretical wedge-angle fitting lines L1 have overlapping portions, a maximum deviation *ΔXmax* is equal to the maximum among the differences between the two adjacent first theoretical wedge-angle fitting lines L1 in the overlapping portions. When the two adjacent first theoretical wedge-angle fitting lines L1 have no overlapping portions, the maximum deviation *ΔXmax* is equal to the difference between wedge angles of the closest two ends of the two adjacent first theoretical wedge-angle fitting lines L1.

When the maximum deviation *ΔXmax* is greater than 0.2 mrad, it is necessary to adjust the distance between the eyebox plane EB10 and a virtual-image plane TB10 corresponding to any one of the two adjacent first theoretical wedge-angle fitting lines L1, so that the maximum deviation *ΔXmax* of one of the two adjacent first theoretical wedge-angle fitting lines L1 designed and the second theoretical wedge-angle fitting line L2 adjusted to be less than or equal to 0.2 mrad, or less than or equal to 0.15 mrad, or less than or equal to 0.10 mrad, or less than or equal to 0.08 mrad, or less than or equal to 0.05 mrad.

Specifically, after determining the wedge angle of the laminated glass 10 in the corresponding projection display region 11 according to the first theoretical wedge-angle fitting line L1, at least one of the two adjacent first theoretical wedge-angle fitting lines L1 needs to be adjusted.

A distance between the eyebox plane EB10 and a virtual-image plane TB10 corresponding to one of the two adjacent first theoretical wedge-angle fitting lines L1 is adjusted.

By adjusting the distance between the eyebox plane EB10 and the virtual-image plane TB10 corresponding to one of the two adjacent first theoretical wedge-angle fitting lines L1, the wedge angle required for eliminating the projected secondary image can be adjusted. Under the same condition, when the distance between the eyebox plane EB10 and the virtual-image plane TB10 corresponding to one of the two adjacent first theoretical wedge-angle fitting lines L1 is larger, the wedge angle required for eliminating the projected secondary image is smaller. In this implementation, the distance between the virtual-image plane TB10 corresponding to one of the two adjacent first theoretical wedge-angle fitting lines L1 and the eyebox plane EB10 may be increased, and/or the distance between the virtual-image plane TB10 corresponding to the other of the two adjacent first theoretical wedge-angle fitting lines L1 and the eyebox plane EB10 may be decreased, so that the two adjacent first theoretical wedge-angle fitting lines L1 are closer to the design target.

The multiple new theoretical wedge angles are recalculated.

In this implementation, after adjusting the distance between the virtual-image plane TB10 and the eyebox plane EB10, the multiple theoretical wedge angles calculated by means of the calculation method in the above implementation can be fitted to a fitting line closer to the design target.

A third theoretical wedge-angle fitting line L3 of wedge angles with distances from incident points to the glass bottom-edge 12 is obtained by fitting, according to the multiple new theoretical wedge angles and distances from incident points corresponding to the multiple new theoretical wedge angles to the glass bottom-edge 12.

It is determined whether a maximum deviation *ΔXmax* between the third theoretical wedge-angle fitting line L3 and the other of the two adjacent first theoretical wedge-angle fitting lines L1 is less than or equal to 0.2 mrad.

In this implementation, it is determined whether the maximum deviation *ΔXmax* between the third theoretical wedge-angle fitting line L3 and the other of the two adjacent first theoretical wedge-angle fitting lines L1 is less than or equal to 0.2 mrad. If the maximum deviation *ΔXmax* between the third theoretical wedge-angle fitting line L3 and the other of the two adjacent first theoretical wedge-angle fitting lines L1 is not less than or equal to 0.2 mrad, the above adjustment operations are repeated. If the maximum deviation *ΔXmax* between the third theoretical wedge-angle fitting line L3 and the other of the two adjacent first theoretical wedge-angle fitting lines L1 is less than or equal to 0.2 mrad, a wedge angle is selected.

A wedge angle of the laminated glass 10 in a corresponding first projection-display-region 115 or a corresponding second projection-display-region 116 is determined, according to the third theoretical wedge-angle fitting line L3.

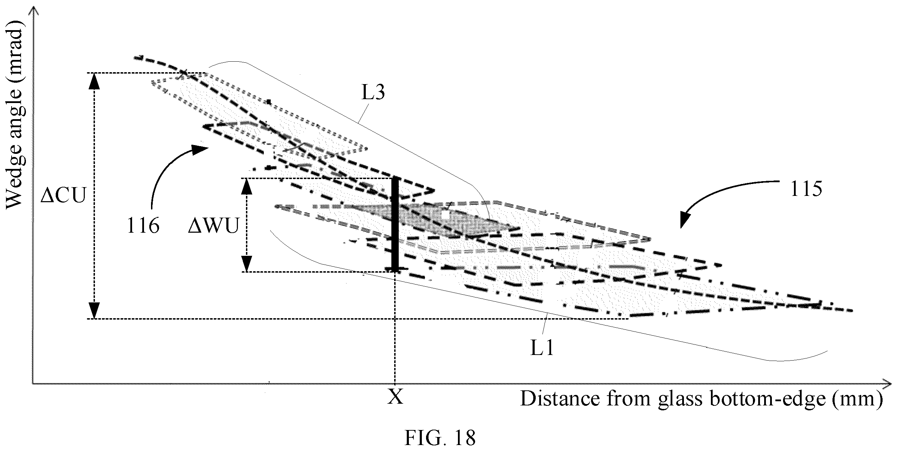

Referring to FIG. 18, in this implementation, a collection of the multiple new theoretical wedge angles and the multiple theoretical wedge angles has a maximum local range *ΔWU,* and has a global range *ΔCU*. A ratio of *ΔWU* to *ΔCU* satisfies: *ΔWU*/*ΔCU* ≤ 0.9.

In this implementation, after adjustment, a collection of the multiple theoretical wedge angles corresponding to the first projection display region 115 and the multiple theoretical wedge angles corresponding to the second projection display region 116 has a maximum local range *ΔWU,* and has an overall range *ΔCU,* and the ratio of *ΔWU* to *ΔCU* satisfies: *ΔWU*/*ΔCU* ≤ 0.9. Therefore, the overall dispersion degree of the multiple theoretical wedge angles adjusted may be smaller, thereby increasing the smoothness of the first theoretical wedge-angle fitting line L1 and the third theoretical wedge-angle fitting line L3. In other words, the overall slope of the first theoretical wedge-angle fitting line L1 and the third theoretical wedge-angle fitting line L3 is reduced, thereby reducing the overall *ROC* of the wedge angle of the laminated glass 10 and reducing the production difficulty of the laminated glass 10. It may be noted that the maximum local range *ΔWU* of the collection of the multiple theoretical wedge angles refers to the maximum among collected local ranges, where a collected local range is a difference between the maximum and the minimum in a collection of multiple theoretical wedge angles at a certain position where the distance from the glass bottom-edge 12 of the laminated glass 10 is *X.* The overall range *ΔCU* of the collection of the multiple theoretical wedge angles refers to a difference between the maximum and the minimum in the collection of all theoretical wedge angles.

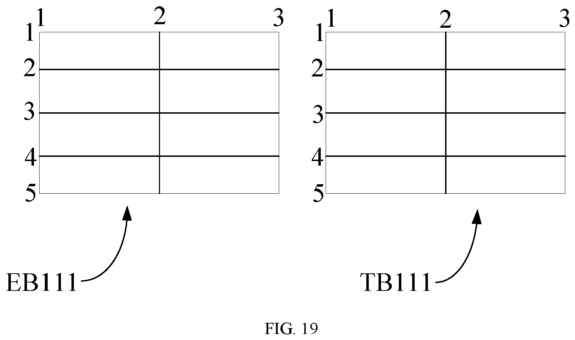

Referring to FIG. 19, FIG. 20, FIG. 21, and FIG. 22, in an implementation of the present disclosure, for example, the at least one projection display region 11 includes one first projection-display-region 115. The first projection-display-region 115 corresponds to AR-HUD and has a projection display distance of 10000 mm.

The laminated glass 10 includes a first transparent substrate 14, an intermediate adhesive layer 16, and a second transparent substrate 15. The thickness of the first transparent substrate 14 is 1.8 mm, the minimum thickness of the intermediate adhesive layer 16 is 0.76 mm, and the thickness of the second transparent substrate 15 is 1.8 mm. A mounting angle of the laminated glass 10 when mounted on the front windshield of the vehicle is 27°. A vertical curvature of the first projection-display-region 115 ranges from R5400 mm to R5500 mm. A transverse curvature of first projection-display region 115 ranges from R2500 mm to R2550 mm.

The eyebox plane EB10 has a dimension of 120 mm × 50 mm. For example, the eyebox plane EB10 includes three eyebox sub-planes EB11 sequentially from high to low. A distance between central points of any two adjacent eyebox sub-planes EB11 of the three eyebox sub-planes EB11 is 40 mm. The three eyebox sub-planes EB11 from high to low have look down angles of -4.2deg, -2.6deg, and -1.0deg, respectively. The three eyebox sub-planes EB11 from high to low each have a look over angle of 0 deg and a field of view of 10 deg × 4 deg. A distance from the central point of a middle eyebox sub-plane EB11 of the three eyebox sub-planes EB11 to an intersection of a primary optical axis of the first projection light-source 211 and a surface of the laminated glass 10 close to the interior of the vehicle is 826 mm, and an incidence angle of the first projection light-source 211 is 68°.

An observation lattice EB111 of *m* × *n* on each of the three eyebox sub-planes EB11 is a lattice of 5 × 3 (see FIG. 19). A virtual-image lattice TB111 of *i* × *j* on each of the three virtual-image sub-planes TB11 in a one-to-one correspondence with the three eyebox sub-planes EB11 is a lattice of 5 × 3.

In a first embodiment, a forward tilted angle of the virtual-image plane is 2.6 deg. In a second embodiment, the forward tilted angle of the virtual-image plane is 88 deg.

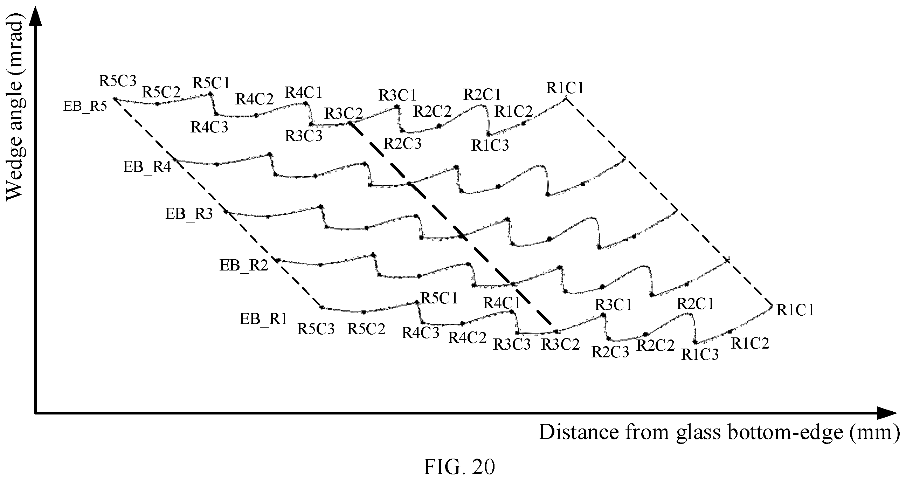

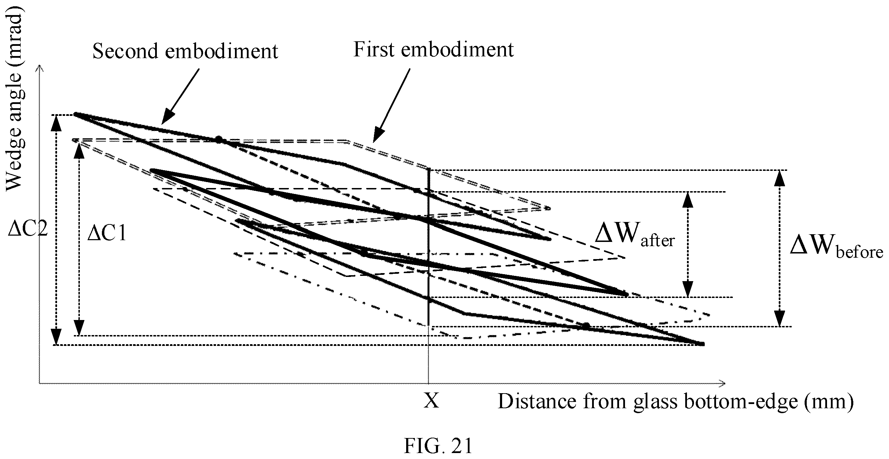

According to the design method for a head-up display system 1 in the foregoing implementation, theoretical wedge angles for eliminating projected secondary images in the first projection-display-region 115 in the first embodiment and the second embodiment are calculated in sequence, and a scatter distribution plot is drawn. For example, a scatter distribution plot (see FIG. 20) is drawn, according to points on a perpendicular bisector of the middle eyebox sub-plane EB11 of the three eyebox sub-planes EB11 in the first embodiment and points on a corresponding virtual-image sub-plane TB11. In FIG. 20, EB_Rm represents the points on the perpendicular bisector of the middle eyebox sub-plane EB11, RiCj represents the points on the corresponding virtual-image sub-plane TB11, and a combination of EB_Rm and RiCj represents theoretical wedge angles corresponding to no secondary images when RiCj is observed from RiCj, where m = 1, 2, 3, 4, 5, i = 1, 2, 3, 4, 5, and j = 1, 2, 3. In addition, a scatter distribution law of the theoretical wedge angles corresponding to no secondary image when the virtual-image sub-plane TB11 is observed from the perpendicular bisector of each of the other eyebox sub-planes EB11 in the first embodiment is the same as that in FIG. 20, and the distribution of the scatters can be calculated out. In addition, a scatter distribution law of theoretical wedge angles corresponding to no secondary image when the virtual-image plane TB10 is observed from points on lines on the eyebox plane EB 10, that are parallel to the perpendicular bisector of the eyebox plane EB10, is approximately the same as that in FIG. 20, and the scatter distribution illustrated by dashed-line boxes in FIG. 21 can be calculated out.

In the second embodiment (see FIG. 21), a distribution of scatters of theoretical wedge angles corresponding to no secondary image when the virtual-image sub-plane TB11 is observed from points on a perpendicular bisector of the eyebox sub-plane EB11 tends to be more converged than in the first embodiment towards the dashed-line segments located in the dashed-line boxes. A dashed-line segment in each dashed-line box represents a connecting line of multiple theoretical wedge angles corresponding to no secondary image when a central point of the virtual-image sub-plane TB11 is observed from points on a perpendicular bisector of the eyebox sub-plane EB11. In addition, a scatter distribution law of theoretical wedge angles corresponding to no secondary image when the virtual-image plane TB10 is observed from points on lines on the eyebox plane EB 10, that are parallel to the perpendicular bisector of the eyebox plane EB10, is approximately the same as that in FIG. 20, and scatter distribution outlines illustrated by dashed-line boxes in FIG. 21 can be calculated out.

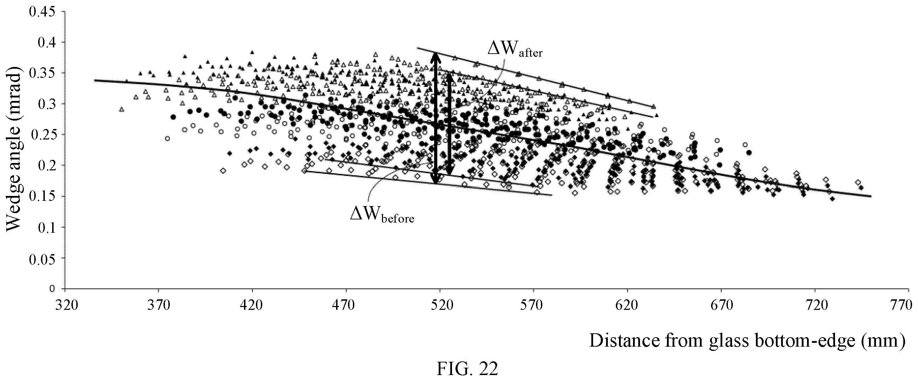

Finally, a total of 1350 theoretical wedge angles can be calculated in the first embodiment and the second embodiment (referring to FIG. 22). Specific comparisons are illustrated in the table below.

| Classification | *ΔC* | *ΔW* | *ΔW*/*ΔC* | *ΔW_{before}*/*ΔW_{after}* | *ΔW*_{*before*/*after*}/*ΔC* |
|---|---|---|---|---|---|
| First embodiment | 0.225 | 0.207 | 91.9% | 0.206 | 91.7% |
| Second embodiment | 0.237 | 0.168 | 70.8% | 0.168 | 70.9% |
| Improvement rate | -5.3% | 18.8% | 21.1% | 18.6% | 20.8% |

In the table, *ΔC* represents a difference between the maximum and the minimum in the collection of the multiple theoretical wedge angles corresponding to no secondary image projected on the laminated glass 10. *ΔC1* represents a difference between the maximum and the minimum in the collection of the multiple theoretical wedge angles corresponding to no secondary image projected on the laminated glass 10 in the first embodiment. *ΔC2* represents a difference between the maximum and the minimum in the collection of the multiple theoretical wedge angles corresponding to no secondary image projected on the laminated glass 10 in the second embodiment. *ΔW* represents the maximum among collected local ranges of the multiple theoretical wedge angles corresponding to no secondary image projected on the laminated glass 10. A collected local range is a difference between the maximum and the minimum in a collection of multiple theoretical wedge angles at a certain position where the distance from the glass bottom-edge 12 of the laminated glass 10 is *X.* In addition, the second embodiment, compared with the first embodiment, has a maximum difference in *ΔW* at about 520 mm from the glass bottom-edge 12, where *ΔW* at this position in the first embodiment is named *ΔW_{before}* and *ΔW* at this position in the second embodiment is named *ΔW_{after}.*

With regard to the HUD, a secondary-image value represents the severity of the projected secondary image, and the secondary-image value of 0 represents no projected secondary image. The maximum local range *ΔW* is proportional to the secondary-image value. When *ΔW* is smaller, the secondary-image value is smaller. A change of *ΔW* corresponds to a change of the secondary-image value. As can be seen from the above table, in the second embodiment, compared with the first embodiment, that is, after the virtual-image plane TB10 is tilted forward, the change of *ΔW*/*ΔC* is 21.1%. *ΔWlΔC* reflects the improvement of the secondary-image value corresponding to the variable wedge angle adopted relative to the constant wedge angle. In other words, when the ratio of *ΔW*/*ΔC* is smaller, the variable wedge angle is more suitable to be adopted. Therefore, the change of *ΔW*/*ΔC* is 21.1%, which means that the second embodiment is more suitable for adopting the variable wedge angle than the first embodiment, and the improvement rate is 21.1%.

In addition, the improvement rate from *ΔW_{before}* to *ΔW_{after}* is 18.6%, indicating the improvement degree of the maximum local range *ΔW* after the virtual-image plane TB10 is tilted forward.

In addition, the improvement rate from *ΔW_{before}*/*ΔC* to *ΔW_{after}*/*ΔC* is 20.8%, indicating the improvement amount of the secondary-image value corresponding to the variable wedge angle adopted relative to the secondary-image value corresponding to the constant wedge angle after the virtual-image plane TB10 is tilted forward.

In conclusion, by comparing the second embodiment with the first embodiment, it can be seen from multiple indicators that, the virtual-image plane TB10 is tilted forward and the variable wedge angle is adopted for the laminated glass 10, so that the secondary image can be significantly reduced.

Although embodiments of the present disclosure have been illustrated and described above, it can be understood that the above embodiments are exemplary and cannot be understood as limitations to the present disclosure. Those of ordinary skill in the art can change, amend, replace, and modify the above embodiments within the scope of the present disclosure, and these modifications and improvements are also regarded as the protection scope of the present disclosure.

## Claims

1. A head-up display system (1), comprising:
laminated glass (10) having at least one projection display region (11), wherein each of the at least one projection display region (11) has a wedge-shaped cross-sectional shape in which a thickness of the laminated glass (10) at an upper edge (111) of the laminated glass (10) is greater than a thickness of the laminated glass (10) at a lower edge (112) of the laminated glass (10), and has a section (113) in which a wedge angle continuously decreases in a direction from the lower edge (112) to the upper edge (111), when the laminated glass (10) is mounted on a vehicle;
a projection assembly (20), wherein the projection assembly (20) comprises at least one projection light-source (21) capable of projecting onto the at least one projection display region (11), projection light emitted by the at least one projection light-source (21) is incident onto the at least one projection display region (11) to form a projection image (114), and the projection image (114) has a virtual-image plane (TB10); and
an eyebox (EB1) having an eyebox plane (EB10) through which the projection image (114) is observed via the at least one projection display region (11); wherein
the eyebox plane (EB10) comprises a plurality of eyebox sub-planes (EB11), the virtual-image plane (TB10) comprises a plurality of virtual-image sub-planes (TB11) corresponding to the plurality of eyebox sub-planes (EB11), each of the plurality of virtual-image sub-planes (TB11) comprises an upper virtual-image plane (TB112) and a lower virtual-image plane (TB113), and an upper virtual-image plane (TB112) and/or a lower virtual-image plane (TB113) of each of at least one of the plurality of virtual-image sub-planes (TB11) is tilted towards a direction in which a corresponding virtual-image sub-plane (TB11) is observed from one of the plurality of eyebox sub-planes (EB11), and has a forward tilted angle greater than or equal to 45°.

2. The head-up display system (1) of claim 1, wherein the upper virtual-image plane (TB112) and/or the lower virtual-image plane (TB113) of each of the at least one of the plurality of virtual-image sub-planes (TB11) is tilted towards the direction in which the corresponding virtual-image sub-plane (TB11) is observed from the eyebox sub-plane (EB11), and has the forward tilted angle greater than or equal to 75°.

3. The head-up display system (1) of claim 1, wherein each of at least one of the plurality of virtual-image sub-planes (TB11) is tilted towards the direction in which the corresponding virtual-image sub-plane (TB11) is observed from the eyebox sub-plane (EB11), and has a forward tilted angle greater than or equal to 45°.

4. The head-up display system (1) of claim 1, wherein a distance between an upper point of a virtual-image sub-plane (TB11) and a central point of a corresponding eyebox sub-plane (EB11) of the plurality of eyebox sub-planes (EB11) is *VID1,* a distance between a lower point of the virtual-image sub-plane (TB11) and the central point of the corresponding eyebox sub-plane (EB11) is *VID2,* and *VID1 > VID2,* wherein *VID1*/*VID2* ≥ 1.5.

5. The head-up display system (1) of claim 1, wherein the section (113) has a measured wedge angle at any point in the section (113) and has a plurality of theoretical wedge angles for eliminating secondary images at any point in the section (113), a plurality of measured wedge angles at all points in the section (113) are fitted to obtain an actual wedge-angle fitting line (L0), a plurality of theoretical wedge angles at all points in the section (113) are fitted to obtain a first theoretical wedge-angle fitting line (L1), and a maximum deviation between the actual wedge-angle fitting line (L0) and a part of the first theoretical wedge-angle fitting line (L1) corresponding to the actual wedge-angle fitting line (L0) is less than or equal to 0.07 mrad, wherein the actual wedge-angle fitting line (L0) and the first theoretical wedge-angle fitting line (L1) each conform to a polynomial function.

6. The head-up display system (1) of claim 5, wherein a maximum rate of change, *ROC,* of continuous monotonic decrease of the wedge angle in the section (113) satisfies: *ROC* ≤ 0.3 mrad/100 mm; or *ROC* ≤ 0.2 mrad/100 mm; or *ROC* ≤ 0.1 mrad/100 mm; or *ROC* ≤ 0.05 mrad/100 mm.

7. The head-up display system (1) of claim 1, wherein an angle between any adjacent two of the plurality of virtual-image sub-planes (TB11) is less than or equal to 15°.

8. The head-up display system (1) of claim 1, wherein in a direction from a glass bottom-edge (12) of the laminated glass (10) to a glass top-edge (13) of the laminated glass (10), a ratio of a length of the section (113) to a length of each of the at least one projection display region (11) is not less than 70%.

9. The head-up display system (1) of claim 1, wherein the at least one projection display region (11) comprises:
at least one first projection-display-region (115), wherein the projection light emitted by the at least one projection light-source (21) is incident onto the at least one first projection-display-region (115) to form a first projection image (1151), and the first projection image (1151) has a virtual image distance of 7 m to 100 m; and
at least one second projection-display-region (116), wherein the projection light emitted by the at least one projection light-source (21) is incident onto the at least one second projection-display-region (116) to form a second projection image (1161), and the second projection image (1161) has a virtual image distance of 1 m to 6 m, wherein
the at least one projection light-source (21) comprises at least one first projection light-source (211) and at least one second projection light-source (212), projection light emitted by the at least one first projection light-source (211) is incident onto the at least one first projection-display-region (115), and projection light emitted by the at least one second projection light-source (212) is incident onto the at least one second projection-display-region (116).

10. The head-up display system (1) of claim 1, wherein the laminated glass (10) comprises:
a first transparent substrate (14);
a second transparent substrate (15); and
an intermediate adhesive layer (16) disposed between the first transparent substrate (14) and the second transparent substrate (15), and used for adhering the first transparent substrate (14) and the second transparent substrate (15); wherein
at least one of the first transparent substrate (14), the second transparent substrate (15), or the intermediate adhesive layer (16) has a wedge angle in the at least one projection display region (11).

11. The head-up display system (1) of claim 10, wherein in the at least one projection display region (11), a wedge angle of the first transparent substrate (14) and a wedge angle of the second transparent substrate (15) are both 0, and a wedge angle of the intermediate adhesive layer (16) is equal to a wedge angle of the at least one projection display region (11); or
in the at least one projection display region (11), the first transparent substrate (14) and/or the second transparent substrate (15) has a wedge angle, the intermediate adhesive layer (16) has a wedge angle, and a sum of the wedge angle of the first transparent substrate (14) and/or the wedge angle of the second transparent substrate (15) and the wedge angle of the intermediate adhesive layer (16) is equal to a wedge angle of the at least one projection display region (11).

12. A design method for a head-up display system, comprising:
providing (S10) a projection assembly and laminated glass, wherein projection light emitted by the projection assembly is incident onto at least one projection display region on the laminated glass;
designing (S20) an eyebox plane inside a vehicle according to an observer inside the vehicle;
designing (S30) a virtual-image plane that is tilted towards a direction in which a corresponding virtual-image sub-plane of the virtual-image plane is observed from an eyebox sub-plane of the eyebox plane, according to a projection image observed by the observer inside the vehicle through each of the at least one projection display region; wherein
the eyebox plane comprises a plurality of eyebox sub-planes, the virtual-image plane comprises a plurality of virtual-image sub-planes, each of the plurality of virtual-image sub-planes corresponds to one of the plurality of eyebox sub-planes, each of the plurality of virtual-image sub-planes comprises an upper virtual-image plane and a lower virtual-image plane, and an upper virtual-image plane and/or a lower virtual-image plane of each of at least one of the plurality of virtual-image sub-planes is tilted towards the direction in which the corresponding virtual-image sub-plane is observed from the eyebox sub-plane, and has a forward tilted angle greater than or equal to 45°;
selecting (S40) an observation lattice on each of the plurality of eyebox sub-planes, and selecting a virtual-image lattice on each of the plurality of virtual-image sub-planes, wherein a connecting line of a point in the observation lattice and a point in the virtual-image lattice passes **through** a corresponding projection display region of the at least one projection display region, and an intersection of the connecting line and the corresponding projection display region is an incident point;
calculating (S50) a plurality of theoretical wedge angles of the laminated glass when projection images at corresponding incident points have no secondary image, according to the projection assembly, the laminated glass, and a plurality of connecting lines;
obtaining (S60) a first theoretical wedge-angle fitting line of wedge angles with distances from incident points to a glass bottom-edge of the laminated glass by fitting, according to the plurality of theoretical wedge angles and distances from incident points corresponding to all theoretical wedge angles to the glass bottom-edge of the laminated glass; and
determining (S70) a wedge angle of the laminated glass in a corresponding projection display region of the at least one projection display region according to the first theoretical wedge-angle fitting line.

13. The design method for a head-up display system of claim 12, wherein a ratio of a maximum local range *ΔW* of the plurality of theoretical wedge angles to a global range *ΔC* of the plurality of theoretical wedge angles satisfies: *ΔW*/*ΔC* ≤ 0.9.

14. The design method for a head-up display system of claim 12, wherein the at least one projection display region comprises at least two first projection-display-regions, or at least two second projection-display-regions, at least two first theoretical wedge-angle fitting lines of wedge angles with distances from incident points to the glass bottom-edge are obtained by fitting, and when a maximum deviation of any two adjacent first theoretical wedge-angle fitting lines of the at least two first theoretical wedge-angle fitting lines is greater than 0.15 mrad, after determining (S70) the wedge angle of the laminated glass in the corresponding projection display region of the at least one projection display region according to the first theoretical wedge-angle fitting line, the design method for a head-up display system further comprises:
adjusting a distance between the eyebox plane and a virtual-image plane corresponding to one of the any two adjacent first theoretical wedge-angle fitting lines;
recalculating a plurality of new theoretical wedge angles;
obtaining a second theoretical wedge-angle fitting line of wedge angles with distances from incident points to the glass bottom-edge by fitting, according to the plurality of new theoretical wedge angles and distances from incident points corresponding to the plurality of new theoretical wedge angles to the glass bottom-edge; and
determining whether a maximum deviation between the second theoretical wedge-angle fitting line and the other of the any two adjacent first theoretical wedge-angle fitting lines is less than or equal to 0.15 mrad;
repeating the above operations, if the maximum deviation between the second theoretical wedge-angle fitting line and the other of the any two adjacent first theoretical wedge-angle fitting lines is not less than or equal to 0.15 mrad; or
determining a wedge angle of the laminated glass in a corresponding first projection-display-region or a corresponding second projection-display-region according to the second theoretical wedge-angle fitting line, if the maximum deviation between the second theoretical wedge-angle fitting line and the other of the any two adjacent first theoretical wedge-angle fitting lines is less than or equal to 0.15 mrad.

15. The design method for a head-up display system of claim 12, wherein the at least one projection display region comprises at least one first projection-display-region and at least one second projection-display-region, at least two first theoretical wedge-angle fitting lines of wedge angles with distances from incident points to the glass bottom-edge are obtained by fitting, and when a maximum deviation of any two adjacent first theoretical wedge-angle fitting lines of the at least two first theoretical wedge-angle fitting lines is greater than 0.2 mrad, after determining (S70) the wedge angle of the laminated glass in the corresponding projection display region of the at least one projection display region according to the first theoretical wedge-angle fitting line, the design method for a head-up display system further comprises:
adjusting a distance between the eyebox plane and a virtual-image plane corresponding to one of the any two adjacent first theoretical wedge-angle fitting lines;
recalculating a plurality of new theoretical wedge angles;
obtaining a third theoretical wedge-angle fitting line of wedge angles with distances from incident points to the glass bottom-edge by fitting, according to the plurality of new theoretical wedge angles and distances from incident points corresponding to the plurality of new theoretical wedge angles to the glass bottom-edge; and
determining whether a maximum deviation between the third theoretical wedge-angle fitting line and the other of the any two adjacent first theoretical wedge-angle fitting lines is less than or equal to 0.2 mrad;
repeating the above operations, if the maximum deviation between the third theoretical wedge-angle fitting line and the other of the any two adjacent first theoretical wedge-angle fitting lines is not less than or equal to 0.2 mrad; or
determining a wedge angle of the laminated glass in a corresponding first projection-display-region or a corresponding second projection-display-region according to the third theoretical wedge-angle fitting line, if the maximum deviation between the third theoretical wedge-angle fitting line and the other of the any two adjacent first theoretical wedge-angle fitting lines is less than or equal to 0.2 mrad.

## Patentansprüche

1. Head-up-Display-System (1), umfassend:
laminiertes Glas (10) mit zumindest einer Projektionsanzeigeregion (11), wobei jede aus der zumindest einen Projektionsanzeigeregion (11) eine keilförmige Querschnittsform aufweist, bei der eine Dicke des laminierten Glases (10) an einer Oberkante (111) des laminierten Glases (10) größer als eine Dicke des laminierten Glases (10) an einer Unterkante (112) des laminierten Glases (10) ist, und einen Abschnitt (113) aufweist, bei dem ein Keilwinkel in einer Richtung von der Unterkante (112) zu der Oberkante (111) kontinuierlich abnimmt, wenn das laminierte Glas (10) an einem Fahrzeug montiert ist;
eine Projektionsanordnung (20), wobei die Projektionsanordnung (20) zumindest eine Projektionslichtquelle (21) umfasst, die in der Lage ist, auf die zumindest eine Projektionsanzeigeregion (11) zu projizieren, wobei Projektionslicht, das durch die zumindest eine Projektionslichtquelle (21) emittiert wird, auf die zumindest eine Projektionsanzeigeregion (11) einfällt, um ein Projektionsbild (114) auszubilden, und das Projektionsbild (114) eine Virtuelles-Bild-Ebene (TB10) aufweist; und
eine Eyebox (EB1) mit einer Eyebox-Ebene (EB10), durch die hindurch das Projektionsbild (114) über die zumindest eine Projektionsanzeigeregion (11) betrachtet wird; wobei
die Eyebox-Ebene (EB10) eine Vielzahl von Eyebox-Teilebenen (EB11) umfasst, wobei die Virtuelles-Bild-Ebene (TB10) eine Vielzahl von Virtuelles-Bild-Teilebenen (TB11) umfasst, die der Vielzahl von Eyebox-Teilebenen (EB11) entspricht, wobei jede aus der Vielzahl von Virtuelles-Bild-Teilebenen (TB11) eine obere Virtuelles-Bild-Ebene (TB112) und eine untere Virtuelles-Bild-Ebene (TB113) umfasst und eine obere Virtuelles-Bild-Ebene (TB112) und/oder eine untere Virtuelles-Bild-Ebene (TB113) aus der zumindest einen aus der Vielzahl von Virtuelles-Bild-Teilebenen (TB11) in eine Richtung geneigt ist, in der eine entsprechende Virtuelles-Bild-Teilebene (TB11) von einer aus der Vielzahl von Eyebox-Teilebenen (EB11) aus betrachtet wird, und einen nach vorne geneigten Winkel aufweist, der größer oder gleich 45° ist.

2. Head-up-Display-System (1) nach Anspruch 1, wobei die obere Virtuelles-Bild-Ebene (TB112) und/oder die untere Virtuelles-Bild-Ebene (TB113) von jeder aus der zumindest einen aus der Vielzahl von Virtuelles-Bild-Teilebenen (TB11) in die Richtung geneigt ist, in der die entsprechende Virtuelles-Bild-Teilebene (TB11) von der Eyebox-Teilebene (EB11) aus betrachtet wird, und den nach vorne geneigten Winkel aufweist, der größer oder gleich 75° ist.

3. Head-up-Display-System (1) nach Anspruch 1, wobei jede aus der zumindest einen aus der Vielzahl von Virtuelles-Bild-Teilebenen (TB11) in die Richtung geneigt ist, in der die entsprechende Virtuelles-Bild-Teilebene (TB11) von der Eyebox-Teilebene (EB11) aus betrachtet wird, und einen nach vorne geneigten Winkel aufweist, der größer oder gleich 45° ist.

4. Head-up-Display-System (1) nach Anspruch 1, wobei eine Entfernung zwischen einem oberen Punkt einer Virtuelles-Bild-Teilebene (Tb11) und einem zentralen Punkt einer entsprechenden Eyebox-Teilebene (EB11) aus der Vielzahl von Eyebox-Teilebenen (EB11) VID1 ist, eine Entfernung zwischen einem unteren Punkt der Virtuelles-Bild-Teilebene (TB11) und dem zentralen Punkt der entsprechenden Eyebox-Teilebene (EB11) VID2 ist und wobei *VID1 > VID2* ist, wobei *VID1*/*VID2* ≥ 1,5 ist.

5. Head-up-Display-System (1) nach Anspruch 1, wobei der Abschnitt (113) einen gemessenen Keilwinkel an einem beliebigen Punkt im Abschnitt (113) aufweist und eine Vielzahl von theoretischen Keilwinkeln zum Entfernen von sekundären Bildern an einem beliebigen Punkt im Abschnitt (113) aufweist, wobei eine Vielzahl von gemessenen Keilwinkeln an allen Punkten in dem Abschnitt (113) angepasst sind, um eine Ist-Keilwinkel-Anpassungslinie (L0) zu erhalten, wobei eine Vielzahl von theoretischen Keilwinkeln an allen Punkten in dem Abschnitt (113) angepasst sind, um eine erste Theoretischer-Keilwinkel-Anpassungslinie (L1) zu erhalten, und wobei eine maximale Abweichung zwischen der Ist-Keilwinkel-Anpassungslinie (L0) und einem der Ist-Keilwinkel-Anpassungslinie (L0) entsprechenden Teil der ersten Theoretischer-Keilwinkel-Anpassungslinie (L1) kleiner oder gleich 0,07 mrad ist, wobei die Ist-Keilwinkel-Anpassungslinie (L0) und die erste Theoretischer-Keilwinkel-Anpassungslinie (L1) jeweils mit einer Polynomfunktion übereinstimmt.

6. Head-up-Display-System (1) nach Anspruch 5, wobei eine maximale Änderungsrate, ROC, einer kontinuierlichen monotonen Verringerung des Keilwinkels im Abschnitt (113) Folgendes erfüllt: *ROC* ≤ 0,3 mrad/100 mm; oder *ROC* ≤ 0,2 mrad/100 mm; oder *ROC* ≤ 0,1 mrad/100 mm; oder *ROC* ≤ 0,05 mrad/100 mm.

7. Head-up-Display-System (1) nach Anspruch 1, wobei ein Winkel zwischen zwei benachbarten aus der Vielzahl von Virtuelles-Bild-Teilebenen (TB11) kleiner oder gleich 15° ist.

8. Head-up-Display-System (1) nach Anspruch 1, wobei in einer Richtung von einer Glasbodenkante (12) des laminierten Glases (10) zu einer Glasoberkante (13) des laminierten Glases (10) ein Verhältnis einer Länge des Abschnitts (113) zu einer Länge von jeder aus der zumindest einen Projektionsanzeigeregion (11) nicht weniger als 70 % beträgt.

9. Head-up-Display-System (1) nach Anspruch 1, wobei die zumindest eine Projektionsanzeigeregion (11) Folgendes umfasst:
zumindest eine erste Projektionsanzeigeregion (115), wobei das von der zumindest einen Projektionslichtquelle (21) emittierte Projektionslicht auf die zumindest eine erste Projektionsanzeigeregion (115) einfällt, um ein erstes Projektionsbild (1151) auszubilden, und das erste Projektionsbild (1151) eine Virtuelle-Bild-Entfernung von 7 m bis 100 m aufweist; und
zumindest eine zweite Projektionsanzeigeregion (116), wobei das von der zumindest einen Projektionslichtquelle (21) emittierte Projektionslicht auf die zumindest eine zweite Projektionsanzeigeregion (116) einfällt, um ein zweites Projektionsbild (1161) auszubilden, und das zweite Projektionsbild (1161) eine Virtuelle-Bild-Entfernung von 1 m bis 6 m aufweist, wobei
die zumindest eine Projektionslichtquelle (21) zumindest eine erste Projektionslichtquelle (211) und zumindest eine zweite Projektionslichtquelle (212) umfasst, wobei von der zumindest einen ersten Projektionslichtquelle (211) emittiertes Projektionslicht auf die zumindest eine erste Projektionsanzeigeregion (115) einfällt und von der zumindest einen zweiten Projektionslichtquelle (212) emittiertes Projektionslicht auf die zumindest eine zweite Projektionsanzeigeregion (116) einfällt.

10. Head-up-Display-System (1) nach Anspruch 1, wobei das laminierte Glas (10) Folgendes umfasst:
ein erstes transparentes Substrat (14);
ein zweites transparentes Substrat (15); und
eine Zwischenhaftschicht (16), die zwischen dem ersten transparenten Substrat (14) und dem zweiten transparenten Substrat (15) angeordnet ist und zum Aneinanderhaften des ersten transparenten Substrats (14) und des zweiten transparenten Substrats (15) verwendet wird; wobei
zumindest eines aus dem ersten transparenten Substrat (14), dem zweiten transparenten Substrat (15) oder der Zwischenhaftschicht (16) einen Keilwinkel in der zumindest einen Projektionsanzeigeregion (11) aufweist.

11. Head-up-Display-System (1) nach Anspruch 10, wobei in der zumindest einen Projektionsanzeigeregion (11) ein Keilwinkel des ersten transparenten Substrats (14) und ein Keilwinkel des zweiten transparenten Substrats (15) beide 0 sind und ein Keilwinkel der Zwischenhaftschicht (16) gleich einem Keilwinkel der zumindest einen Projektionsanzeigeregion (11) ist; oder wobei
in der zumindest einen Projektionsanzeigeregion (11) das erste transparente Substrat (14) und/oder das zweite transparente Substrat (15) einen Keilwinkel aufweist, die Zwischenhaftschicht (16) einen Keilwinkel aufweist und eine Summe des Keilwinkels des ersten transparenten Substrats (14) und/oder des Keilwinkels des zweiten transparenten Substrats (15) und dem Keilwinkel der Zwischenhaftschicht (16) gleich einem Keilwinkel der zumindest einen Projektionsanzeigeregion (11) ist.

12. Ausgestaltungsverfahren für ein Head-up-Display-System, umfassend:
Bereitstellen (S10) von einer Projektionsanordnung und laminiertem Glas, wobei Projektionslicht, das durch die Projektionsanordnung emittiert wird, auf zumindest eine Projektionsanzeigeregion auf dem laminierten Glas einfällt,
Ausgestalten (S20) einer Eyebox-Ebene innerhalb eines Fahrzeugs entsprechend einem Betrachter in dem Fahrzeug;
Ausgestalten (S30) einer Virtuelles-Bild-Ebene, die in eine Richtung geneigt ist, in der eine entsprechende Virtuelles-Bild-Teilebene der Virtuelles-Bild-Ebene von einer Eyebox-Teilebene der Eyebox-Ebene aus betrachtet wird, entsprechend einem Projektionsbild, das von dem Betrachter in dem Fahrzeug durch jede aus der zumindest einen Projektionsanzeigeregion hindurch betrachtet wird; wobei
die Eyebox-Ebene eine Vielzahl von Eyebox-Teilebenen umfasst, wobei die Virtuelles-Bild-Ebene eine Vielzahl von Virtuelles-Bild-Teilebenen umfasst, wobei jede aus der Vielzahl von Virtuelles-Bild-Teilebenen einer aus der Vielzahl von Eyebox-Teilebenen entspricht, wobei jede aus der Vielzahl von Virtuelles-Bild-Teilebenen eine obere Virtuelles-Bild-Ebene und eine untere Virtuelles-Bild-Ebene umfasst und eine obere Virtuelles-Bild-Ebene und/oder eine untere Virtuelles-Bild-Ebene von jeder aus der zumindest einen aus der Vielzahl von Virtuelles-Bild-Teilebenen in die Richtung geneigt ist, in der die entsprechende Virtuelles-Bild-Teilebene von der Eyebox-Teilebene aus betrachtet wird, und einen nach vorne geneigten Winkel von größer oder gleich 45° aufweist;
Auswählen (S40) eines Betrachtungsgitters auf jeder aus der Vielzahl von Eyebox-Teilebenen und Auswählen eines Virtuelles-Bild-Gitters auf jeder aus der Vielzahl von Virtuelles-Bild-Teilebenen, wobei eine Verbindungslinie eines Punkts in dem Betrachtungsgitter und eines Punkts in dem Virtuelles-Bild-Gitter durch eine entsprechende Projektionsanzeigeregion der zumindest einen Projektionsanzeigeregion hindurch verläuft und eine Schnittstelle der Verbindungslinie und der entsprechenden Projektionsanzeigeregion ein Einfallspunkt ist;
Berechnen (S50) einer Vielzahl von theoretischen Keilwinkeln des laminierten Glases, wenn Projektionsbilder an entsprechenden Einfallspunkten kein sekundäres Bild aufweisen, gemäß der Projektionsanordnung, dem laminierten Glas und einer Vielzahl von Verbindungslinien;
Erhalten (S60) einer ersten Theoretischer-Keilwinkel-Anpassungslinie von Keilwinkeln von Entfernungen von Einfallspunkten zu einer Glasbodenkante des laminierten Glases durch Anpassen gemäß der Vielzahl von theoretischen Keilwinkeln und Entfernungen von Einfallspunkten, die allen theoretischen Keilwinkeln entsprechen, bis zur Glasbodenkante des laminierten Glases; und
Bestimmen (S70) eines Keilwinkel des laminierten Glases in einer entsprechenden Projektionsanzeigeregion aus der zumindest einen Projektionsanzeigeregion gemäß der ersten Theoretischer-Keilwinkel-Anpassungslinie.

13. Ausgestaltungsverfahren für ein Head-up-Display-System nach Anspruch 12, wobei ein Verhältnis eines maximalem lokalen Bereichs *ΔW* der Vielzahl von theoretischen Keilwinkeln zu einem Gesamtbereich *ΔC* der Vielzahl von theoretischen Keilwinkeln Folgendes erfüllt: *ΔW*/*ΔC* ≤ 0,9.

14. Ausgestaltungsverfahren für ein Head-up-Display-System nach Anspruch 12, wobei die zumindest eine Projektionsanzeigeregion zumindest zwei erste Projektionsanzeigeregionen oder zumindest zwei zweite Projektionsanzeigeregionen umfasst, wobei zumindest zwei erste Theoretischer-Keilwinkel-Anpassungslinien von Keilwinkeln mit Entfernungen von Einfallspunkten bis zur Glasbodenkante durch Anpassen erhalten werden, und wobei, wenn eine maximale Abweichung von zwei beliebigen benachbarten ersten Theoretischer-Keilwinkel-Anpassungslinien aus den zumindest zwei ersten Theoretischer-Keilwinkel-Anpassungslinien größer als 0,15 mrad ist, nach dem Bestimmen (S70) des Keilwinkels des laminierten Glases in der entsprechenden Projektionsanzeigeregion aus der zumindest einen Projektionsanzeigeregion gemäß der ersten Theoretischer-Keilwinkel-Anpassungslinie das Ausgestaltungsverfahren für ein Head-up-Display-System ferner Folgendes umfasst:
Anpassen einer Entfernung zwischen der Eyebox-Ebene und einer Virtuelles-Bild-Ebene entsprechend einer aus zwei beliebigen benachbarten ersten Theoretischer-Keilwinkel-Anpassungslinien;
Neuberechnen einer Vielzahl von neuen theoretischen Keilwinkeln;
Erhalten einer zweiten Theoretischer-Keilwinkel-Anpassungslinie von Keilwinkeln mit Entfernungen von Einfallspunkten bis zur Glasbodenkante durch Anpassen gemäß der Vielzahl von neuen theoretischen Keilwinkeln und Entfernungen von Einfallspunkten, die der Vielzahl von neuen theoretischen Keilwinkeln entsprechen, bis zur Glasbodenkante; und
Bestimmen, ob eine maximale Abweichung zwischen der zweiten Theoretischer-Keilwinkel-Anpassungslinie und der anderen aus den beliebigen zwei benachbarten ersten Theoretischer-Kantenwinkel-Anpassungslinien kleiner oder gleich 0,15 mrad ist;
Wiederholen der obigen Vorgänge, wenn die maximale Abweichung zwischen der zweiten Theoretischer-Keilwinkel-Anpassungslinie und der anderen aus den beliebigen zwei benachbarten ersten Theoretischer-Kantenwinkel-Anpassungslinien nicht kleiner oder gleich 0,15 mrad ist; oder
Bestimmen eines Keilwinkels des laminierten Glases in einer entsprechenden ersten Projektionsanzeigeregion oder einer entsprechenden zweiten Projektionsanzeigeregion gemäß der zweiten Theoretischer-Keilwinkel-Anpassungslinie, wenn die maximale Abweichung zwischen der zweiten Theoretischer-Keilwinkel-Anpassungslinie und der anderen aus den beliebigen zwei benachbarten ersten Theoretischer-Kantenwinkel-Anpassungslinien kleiner oder gleich 0,15 mrad ist.

15. Ausgestaltungsverfahren für ein Head-up-Display-System nach Anspruch 12, wobei die zumindest eine Projektionsanzeigeregion zumindest eine erste Projektionsanzeigeregion und zumindest eine zweite Projektionsanzeigeregionen umfasst, wobei zumindest zwei erste Theoretischer-Keilwinkel-Anpassungslinien von Keilwinkeln mit Entfernungen von Einfallspunkten bis zur Glasbodenkante durch Anpassen erhalten werden, und wobei, wenn eine maximale Abweichung von zwei beliebigen benachbarten ersten Theoretischer-Keilwinkel-Anpassungslinien aus den zumindest zwei ersten Theoretischer-Keilwinkel-Anpassungslinien größer als 0,2 mrad ist, nach dem Bestimmen (S70) des Keilwinkels des laminierten Glases in der entsprechenden Projektionsanzeigeregion aus der zumindest einen Projektionsanzeigeregion gemäß der ersten Theoretischer-Keilwinkel-Anpassungslinie das Ausgestaltungsverfahren für ein Head-up-Display-System ferner Folgendes umfasst:
Anpassen einer Entfernung zwischen der Eyebox-Ebene und einer Virtuelles-Bild-Ebene entsprechend einer aus zwei beliebigen benachbarten ersten Theoretischer-Keilwinkel-Anpassungslinien;
Neuberechnen einer Vielzahl von neuen theoretischen Keilwinkeln;
Erhalten einer dritten Theoretischer-Keilwinkel-Anpassungslinie von Keilwinkeln mit Entfernungen von Einfallspunkten bis zur Glasbodenkante durch Anpassen gemäß der Vielzahl von neuen theoretischen Keilwinkeln und Entfernungen von Einfallspunkten, die der Vielzahl von neuen theoretischen Keilwinkeln entsprechen, bis zur Glasbodenkante; und
Bestimmen, ob eine maximale Abweichung zwischen der dritten Theoretischer-Keilwinkel-Anpassungslinie und der anderen aus den beliebigen zwei benachbarten ersten Theoretischer-Kantenwinkel-Anpassungslinien kleiner oder gleich 0,2 mrad ist;
Wiederholen der obigen Vorgänge, wenn die maximale Abweichung zwischen der dritten Theoretischer-Keilwinkel-Anpassungslinie und der anderen aus den beliebigen zwei benachbarten ersten Theoretischer-Kantenwinkel-Anpassungslinien nicht kleiner oder gleich 0,2 mrad ist; oder
Bestimmen eines Keilwinkels des laminierten Glases in einer entsprechenden ersten Projektionsanzeigeregion oder einer entsprechenden zweiten Projektionsanzeigeregion gemäß der dritten Theoretischer-Keilwinkel-Anpassungslinie, wenn die maximale Abweichung zwischen der dritten Theoretischer-Keilwinkel-Anpassungslinie und der anderen aus den beliebigen zwei benachbarten ersten Theoretischer-Kantenwinkel-Anpassungslinien kleiner oder gleich 0,2 mrad ist.

## Revendications

1. Système d'affichage tête haute (1), comprenant :
du verre feuilleté (10) présentant au moins une zone d'affichage par projection (11), dans lequel chacune de la au moins une zone d'affichage par projection (11) présente une forme de section transversale en forme de coin dans laquelle une épaisseur du verre feuilleté (10) au niveau d'un bord supérieur (111) du verre feuilleté (10) est supérieure à une épaisseur du verre feuilleté (10) au niveau d'un bord inférieur (112) du verre feuilleté (10), et présente une section (113) dans laquelle un angle de coin diminue de manière continue dans une direction allant du bord inférieur (112) au bord supérieur (111), lorsque le verre feuilleté (10) est monté sur un véhicule ;
un ensemble de projection (20), dans lequel l'ensemble de projection (20) comprend au moins une source de lumière de projection (21) capable de se projeter sur la au moins une zone d'affichage par projection (11), la lumière de projection émise par la au moins une source de lumière de projection (21) est incidente sur la au moins une zone d'affichage par projection (11) pour former une image de projection (114), et l'image de projection (114) présente un plan d'image virtuelle (TB10) ; et
un boîtier oculaire (EB1) présentant un plan de boîtier oculaire (EB10) à travers lequel l'image de projection (114) est observée via la au moins une zone d'affichage par projection (11) ; dans lequel
le plan de boîtier oculaire (EB10) comprend une pluralité de sous-plans de boîtier oculaire (EB11), le plan d'image virtuelle (TB10) comprend une pluralité de sous-plans d'image virtuelle (TB11) correspondant à la pluralité de sous-plans de boîtier oculaire (EB11), chacun de la pluralité de sous-plans d'image virtuelle (TB11) comprend un plan d'image virtuelle supérieur (TB112) et un plan d'image virtuelle inférieur (TB113), et un plan d'image virtuelle supérieur (TB112) et/ou un plan d'image virtuelle inférieur (TB113) de chacun d'au moins un de la pluralité de sous-plans d'image virtuelle (TB11) est incliné vers une direction dans laquelle un sous-plan d'image virtuelle correspondant (TB11) est observé à partir d'un de la pluralité de sous-plans de boîtier oculaire (EB11), et présente un angle d'inclinaison vers l'avant supérieur ou égal à 45°.

2. Système d'affichage tête haute (1) selon la revendication 1, dans lequel le plan d'image virtuelle supérieur (TB112) et/ou le plan d'image virtuelle inférieur (TB113) de chacun du au moins un de la pluralité de sous-plans d'image virtuelle (TB11) est incliné vers la direction dans laquelle le sous-plan d'image virtuelle correspondant (TB11) est observé à partir du sous-plan de boîtier oculaire (EB11), et présente l'angle d'inclinaison vers l'avant supérieur ou égal à 75°.

3. Système d'affichage tête haute (1) selon la revendication 1, dans lequel chacun d'au moins un de la pluralité de sous-plans d'image virtuelle (TB11) est incliné vers la direction dans laquelle le sous-plan d'image virtuelle correspondant (TB11) est observé à partir du sous-plan de boîtier oculaire (EB11), et présente un angle d'inclinaison vers l'avant supérieur ou égal à 45°.

4. Système d'affichage tête haute (1) selon la revendication 1, dans lequel une distance entre un point supérieur d'un sous-plan d'image virtuelle (TB11) et un point central d'un sous-plan de boîtier oculaire correspondant (EB11) de la pluralité de sous-plans de boîtier oculaire (EB11) est *VID1*, une distance entre un point inférieur du sous-plan d'image virtuelle (TB11) et le point central du sous-plan de boîtier oculaire correspondant (EB11) est *VID2*, et *VID1 > VID2*, dans lequel *VID1*/*VID2 ≥ 1,5*.

5. Système d'affichage tête haute (1) selon la revendication 1, dans lequel la section (113) présente un angle de coin mesuré en tout point de la section (113) et présente une pluralité d'angles de coin théoriques pour éliminer des images secondaires en tout point de la section (113), une pluralité d'angles de coin mesurés en tous points dans la section (113) sont ajustés pour obtenir une ligne d'ajustement d'angle de coin réel (L0), une pluralité d'angles de coin théoriques en tous points dans la section (113) sont ajustés pour obtenir une première ligne d'ajustement d'angle de coin théorique (L1), et un écart maximum entre la ligne d'ajustement d'angle de coin réel (L0) et une partie de la première ligne d'ajustement d'angle de coin théorique (L1) correspondant à la ligne d'ajustement d'angle de coin réel (L0) est inférieur ou égal à 0,07 mrad, dans lequel la ligne d'ajustement d'angle de coin réel (L0) et la première ligne d'ajustement d'angle de coin théorique (L1) sont chacune conformes à une fonction polynomiale.

6. Système d'affichage tête haute (1) selon la revendication 5, dans lequel une vitesse maximale de changement, ROC, de diminution monotone continue de l'angle de coin dans la section (113) satisfait : *ROC* ≤ 0,3 mrad/100 mm ; ou *ROC* ≤ 0,2 mrad/100 mm ; ou *ROC* ≤ 0,1 mrad/100 mm ; ou *ROC* ≤ 0,05 mrad/100 mm.

7. Système d'affichage tête haute (1) selon la revendication 1, dans lequel un angle entre deux quelconques sous-plans adjacents de la pluralité de sous-plans d'image virtuelle (TB11) est inférieur ou égal à 15°.

8. Système d'affichage tête haute (1) selon la revendication 1, dans lequel, dans une direction allant d'un bord inférieur de verre (12) du verre feuilleté (10) vers un bord supérieur de verre (13) du verre feuilleté (10), un rapport d'une longueur de la section (113) à une longueur de chacune de la au moins une zone d'affichage par projection (11) n'est pas inférieur à 70 %.

9. Système d'affichage tête haute (1) selon la revendication 1, dans lequel la au moins une zone d'affichage par projection (11) comprend :
au moins une première zone d'affichage par projection (115), dans lequel la lumière de projection émise par la au moins une source de lumière de projection (21) est incidente sur la au moins une première zone d'affichage par projection (115) pour former une première image de projection (1151), et la première image de projection (1151) présente une distance d'image virtuelle de 7 m à 100 m ; et
au moins une seconde zone d'affichage par projection (116), dans lequel la lumière de projection émise par la au moins une source de lumière de projection (21) est incidente sur la au moins une seconde zone d'affichage par projection (116) pour former une seconde image de projection (1161), et la seconde image de projection (1161) présente une distance d'image virtuelle de 1 m à 6 m, dans lequel
la au moins une source de lumière de projection (21) comprend au moins une première source de lumière de projection (211) et au moins une seconde source de lumière de projection (212), la lumière de projection émise par la au moins une première source de lumière de projection (211) est incidente sur la au moins une première zone d'affichage par projection (115), et la lumière de projection émise par la au moins une seconde source de lumière de projection (212) est incidente sur la au moins une seconde zone d'affichage par projection (116).

10. Système d'affichage tête haute (1) selon la revendication 1, dans lequel le verre feuilleté (10) comprend :
un premier substrat transparent (14) ;
un second substrat transparent (15) ; et
une couche adhésive intermédiaire (16) disposée entre le premier substrat transparent (14) et le second substrat transparent (15), et utilisée pour mettre en adhérence le premier substrat transparent (14) et le second substrat transparent (15) ; dans lequel
au moins l'un du premier substrat transparent (14), du second substrat transparent (15) ou de la couche adhésive intermédiaire (16) présente un angle de coin dans la au moins une zone d'affichage par projection (11).

11. Système d'affichage tête haute (1) selon la revendication 10, dans lequel dans la au moins une zone d'affichage par projection (11), un angle de coin du premier substrat transparent (14) et un angle de coin du second substrat transparent (15) sont tous deux égaux à 0, et un angle de coin de la couche adhésive intermédiaire (16) est égal à un angle de coin de la au moins une zone d'affichage par projection (11) ; ou
dans la au moins une zone d'affichage par projection (11), le premier substrat transparent (14) et/ou le second substrat transparent (15) présente un angle de coin, la couche adhésive intermédiaire (16) présente un angle de coin, et une somme de l'angle de coin du premier substrat transparent (14) et/ou de l'angle de coin du second substrat transparent (15) et de l'angle de coin de la couche adhésive intermédiaire (16) est égale à un angle de coin de la au moins une zone d'affichage par projection (11).

12. Procédé de conception pour un système d'affichage tête haute, comprenant les étapes consistant à :
fournir (S10) un ensemble de projection et du verre feuilleté, dans lequel la lumière de projection émise par l'ensemble de projection est incidente sur au moins une zone d'affichage par projection sur le verre feuilleté ;
concevoir (S20) un plan de boîtier oculaire à l'intérieur d'un véhicule selon un observateur à l'intérieur du véhicule ;
concevoir (S30) un plan d'image virtuelle qui est incliné vers une direction dans laquelle un sous-plan d'image virtuelle correspondant du plan d'image virtuelle est observé à partir d'un sous-plan de boîtier oculaire du plan de boîtier oculaire, selon une image de projection observée par l'observateur à l'intérieur du véhicule à travers chacune de la au moins une zone d'affichage par projection ; dans lequel
le plan de boîtier oculaire comprend une pluralité de sous-plans de boîtier oculaire, le plan d'image virtuelle comprend une pluralité de sous-plans d'image virtuelle, chacun de la pluralité de sous-plans d'image virtuelle correspond à l'un de la pluralité de sous-plans de boîtier oculaire, chacun de la pluralité de sous-plans d'image virtuelle comprend un plan d'image virtuelle supérieur et un plan d'image virtuelle inférieur, et un plan d'image virtuelle supérieur et/ou un plan d'image virtuelle inférieur de chacun d'au moins l'un de la pluralité de sous-plans d'image virtuelle est incliné vers la direction dans laquelle le sous-plan d'image virtuelle correspondant est observé à partir du sous-plan de boîtier oculaire, et présente un angle d'inclinaison vers l'avant supérieur ou égal à 45° ;
sélectionner (S40) un réseau d'observation sur chacun de la pluralité de sous-plans de boîtier oculaire, et sélectionner un réseau d'images virtuelles sur chacun de la pluralité de sous-plans d'image virtuelle, dans lequel une ligne de connexion d'un point dans le réseau d'observation et d'un point dans le réseau d'images virtuelles passe à travers une zone d'affichage par projection correspondante de la au moins une zone d'affichage par projection, et une intersection de la ligne de connexion et de la zone d'affichage par projection correspondante est un point d'incidence ;
calculer (S50) une pluralité d'angles de coin théoriques du verre feuilleté lorsque des images de projection en des points d'incidence correspondants n'ont pas d'image secondaire, selon l'ensemble de projection, le verre feuilleté, et une pluralité de lignes de connexion ;
obtenir (S60) une première ligne d'ajustement d'angle de coin théorique d'angles de coin avec des distances entre des points d'incidence et un bord inférieur de verre du verre feuilleté par ajustement, en fonction de la pluralité d'angles de coin théoriques et de distances entre des points incidents correspondant à tous les angles de coin théoriques et le bord inférieur de verre du verre feuilleté ; et
déterminer (S70) un angle de coin du verre feuilleté dans une zone d'affichage par projection correspondante de la au moins une zone d'affichage par projection selon la première ligne d'ajustement d'angle de coin théorique.

13. Procédé de conception pour un système d'affichage tête haute selon la revendication 12, dans lequel un rapport d'une plage locale maximale ΔW de la pluralité d'angles de coin théoriques à une plage globale ΔC de la pluralité d'angles de coin théoriques satisfait : ΔW|ΔC ≤ 0,9.

14. Procédé de conception pour un système d'affichage tête haute selon la revendication 12, dans lequel la au moins une zone d'affichage par projection comprend au moins deux premières zones d'affichage par projection, ou au moins deux secondes zones d'affichage par projection, au moins deux premières lignes d'ajustement d'angle de coin théorique d'angles de coin avec des distances entre des points d'incidence et le bord inférieur du verre sont obtenues par ajustement, et lorsqu'une déviation maximale de deux premières lignes d'ajustement d'angle de coin théorique adjacentes quelconques des au moins deux premières lignes d'ajustement d'angle de coin théorique est supérieure à 0,15 mrad, après détermination (S70) de l'angle de coin du verre feuilleté dans la zone d'affichage par projection correspondante de la au moins une zone d'affichage par projection selon la première ligne d'ajustement d'angle de coin théorique, le procédé de conception pour un système d'affichage tête haute comprend en outre les étapes consistant à :
ajuster une distance entre le plan de boîtier oculaire et un plan d'image virtuelle correspondant à l'une de deux quelconques premières lignes d'ajustement d'angle de coin théorique adjacentes ;
recalculer une pluralité de nouveaux angles de coin théoriques ;
obtenir une deuxième ligne d'ajustement d'angle de coin théorique avec des distances entre des points d'incidence et le bord inférieur de verre par ajustement, en fonction de la pluralité de nouveaux angles de coin théoriques et des distances entre les points d'incidence correspondant à la pluralité de nouveaux angles de coin théoriques et le bord inférieur de verre ; et
déterminer si une déviation maximale entre la deuxième ligne d'ajustement d'angle de coin théorique et l'autre des deux quelconques premières lignes d'ajustement d'angle de coin théorique adjacentes est inférieure ou égale à 0,15 mrad ;
en répétant les opérations ci-dessus, si la déviation maximale entre la deuxième ligne d'ajustement d'angle de coin théorique et l'autre des deux quelconques premières lignes d'ajustement d'angle de coin théorique adjacentes n'est pas inférieure ou égale à 0,15 mrad ; ou
déterminer un angle de coin du verre feuilleté dans une première zone d'affichage par projection correspondante ou une seconde zone d'affichage par projection correspondante selon la deuxième ligne d'ajustement d'angle de coin théorique, si la déviation maximale entre la deuxième ligne d'ajustement d'angle de coin théorique et l'autre des deux quelconques premières lignes d'ajustement d'angle de coin théorique adjacentes est inférieure ou égale à 0,15 mrad.

15. Procédé de conception pour un système d'affichage tête haute selon la revendication 12, dans lequel la au moins une zone d'affichage par projection comprend au moins une première zone d'affichage par projection et au moins une deuxième zone d'affichage par projection, au moins deux premières lignes d'ajustement d'angle de coin théorique d'angles de coin avec des distances entre des points d'incidence et le bord inférieur du verre sont obtenues par ajustement, et lorsqu'une déviation maximale de deux premières lignes d'ajustement d'angle de coin théorique adjacentes quelconques des au moins deux premières lignes d'ajustement d'angle de coin théorique est supérieure à 0,2 mrad, après détermination (S70) de l'angle de coin du verre feuilleté dans la zone d'affichage par projection correspondante de la au moins une zone d'affichage par projection selon la première ligne d'ajustement d'angle de coin théorique, le procédé de conception pour un système d'affichage tête haute comprend en outre les étapes consistant à :
ajuster une distance entre le plan de boîtier oculaire et un plan d'image virtuelle correspondant à l'une de deux quelconques premières lignes d'ajustement d'angle de coin théorique adjacentes ;
recalculer une pluralité de nouveaux angles de coin théoriques ;
obtenir une troisième ligne d'ajustement d'angle de coin théorique d'angles de coin avec des distances entre des points d'incidence et le bord inférieur de verre par ajustement, en fonction de la pluralité de nouveaux angles de coin théoriques et de distances entre des points d'incidence correspondant à la pluralité de nouveaux angles de coin théoriques et le bord inférieur de verre ; et
déterminer si une déviation maximale entre la troisième ligne théorique d'angle de coin et l'autre des deux quelconques premières lignes d'angle de coin théorique adjacentes est inférieure ou égale à 0,2 mrad ;
répéter les opérations ci-dessus, si la déviation maximale entre la troisième ligne d'ajustement d'angle de coin théorique et l'autre des deux quelconques premières lignes d'ajustement d'angle de coin théorique adjacentes n'est pas inférieur ou égal à 0,2 mrad ; ou
déterminer un angle de coin du verre feuilleté dans une première zone d'affichage par projection correspondante ou une seconde zone d'affichage par projection correspondante selon la troisième ligne d'ajustement d'angle de coin théorique, si la déviation maximale entre la troisième ligne d'ajustement d'angle de coin théorique et l'autre des deux premières lignes d'ajustement d'angle de coin théorique adjacentes est inférieure ou égale à 0,2 mrad.
